# EUROPÄISCHE PATENTSCHRIFT

(11) **EP 3 329 102 B1**
(45) Veröffentlichungstag und Bekanntmachung des Hinweises auf die Patenterteilung: **30.09.2020**
(21) Anmeldenummer: 16770676.1
(22) Anmeldetag: 01.08.2016
(51) Int. Cl.: F01D 25/28, B64F 5/00

(54) **MONTAGESYSTEM ZUM MONTIEREN, DEMONTIEREN UND/ODER WARTEN EINER GASTURBINE**
ASSEMBLY SYSTEM FOR ASSEMBLING, DISASSEMBLING AND/OR MAINTAINING A GAS TURBINE
SYSTÈME DE MONTAGE POUR LE MONTAGE, LE DÉMONTAGE ET/OU LA MAINTENANCE D'UNE TURBINE À GAZ

(30) Priorität: 31.07.2015 DE 102015214667
(43) Veröffentlichungstag der Anmeldung: 06.06.2018
(73) Patentinhaber: MTU Aero Engines AG, 80995 München (DE)
(72) Erfinder: HOFNER, Stefan, 85276 Hettenshausen (DE); CEROVSKY, Florian, 82467 Garmisch-Partenkirchen (DE); SEIBOLD, Franz, 84034 Landshut (DE); FOCKE, Helmut, 85241 Hebertshausen (DE); GLAS, Anton, 84079 Bruckberg (DE); FRANK, Christian, 86577 Sielenbach (DE)
(86) Internationale Anmeldenummer: PCT/DE2016/000294
(87) Internationale Veröffentlichungsnummer: WO 2017/020882

(56) Entgegenhaltungen:
- DE-A1- 4 302 206
- DE-U1- 9 203 607
- US-A- 2 920 773
- US-A- 5 722 512
- US-A1- 2007 189 884
- US-A1- 2012 110 816
- US-A1- 2015 135 535

## Beschreibung

Die Erfindung betrifft ein Montagesystem zum Montieren, Demontieren und/oder Warten einer Gasturbine sowie ein Verfahren zum zumindest teilweisen Montieren einer Gasturbine.

In der Druckschrift US 5,575,607 ist ein Montagesystem offenbart, wobei für die Montage einer Gasturbine, beispielsweise eines Flugtriebwerks, diese hängend an einem schweren Tragerahmen angeordnet ist. Dazu sind vier horizontal verlaufende T-Träger notwendig, die als Schiene dienen. An diesen vier Trägern ist mit mehreren Ketten ein Adapter angehängt, an dem dann die Gasturbine befestigt wird. Damit ist aber ein aufwändiges und unflexibles Schienensystem für die Handhabung der Gasturbine erforderlich. Zum Transportieren der Gasturbine ist eine zusätzliche, ähnlich große Transportvorrichtung notwendig, die in den Tragerahmen positioniert werden muss. Dies hat den Nachteil, dass der Tragerahmen die Zugänglichkeit für Montage-, Demontage- und Wartungs- bzw. Reparaturarbeiten an der Gasturbine stark einschränkt. Ferner muss die Gasturbine für den Transport zunächst vom Tragerahmen auf die andere Transportvorrichtung montiert werden, was neben einem erhöhten Arbeitsaufwand auch die Gefahr von Beschädigungen der Gasturbine birgt.

Dokument DE 92 03 607 U1 offenbart ein rangierbares, gleisloses Flurfördergerät mit zwei Fahrgestellen, die einander gegenüberliegend an dem Flurfördergerät angeordnet und über ein Trägergestell miteinander verbunden sind.

Aufgabe der vorliegenden Erfindung ist es, ein flexibleres Montagesystem zum einfacheren Montieren, Demontieren und/oder Warten einer Gasturbine sowie ein entsprechend verbessertes Verfahren zum zumindest teilweisen Montieren einer Gasturbine bereitzustellen.

Die Aufgaben werden erfindungsgemäß durch ein Montagesystem mit den Merkmalen des Patentanspruchs 1 sowie durch ein Verfahren gemäß Patentanspruch 13 zum zumindest teilweisen Montieren einer Gasturbine gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Montagesystems als vorteilhafte Ausgestaltungen des Verfahrens und umgekehrt anzusehen sind.

Ein erster Aspekt der Erfindung betrifft ein Montagesystem zum Montieren, Demontieren und/oder Warten einer Gasturbine. Erfindungsgemäß umfasst das Montagesystem einen ersten Führungswagen zum Halten und Bewegen eines ersten Triebwerkbauteils, insbesondere eines Turbinenmoduls der Gasturbine, einen zweiten Führungswagen zum Halten und Bewegen eines zweiten Triebwerkbauteils, insbesondere eines Verdichtermoduls der Gasturbine, und ein Verbindungsmodul, welches durch korrespondierende Kopplungsmittel lösbar mit dem ersten und dem zweiten Haltemodul verbindbar ist Wobei wenigstens einer der Führungswagen eine Triebwerkaufnahme umfasst, mittels welcher das zugeordnete Triebwerkbauteil außerhalb seines Massenmittelpunktes um drei Achsen drehbar lagerbar ist, und wobei wenigstens einer der Führungswagen eine Triebwerkaufnahme umfasst, mittels welcher das zugeordnete Triebwerkbauteil translatorisch entlang wenigstens einer Achse bewegbar ist. Dies ermöglicht das spannungsfreie Transportieren, Montieren, Demontieren und Warten der Gasturbine. Aufgrund seines modularen Aufbaus kann das Montagesystem besonders einfach an unterschiedliche Triebwerkbauteile und Gasturbinentypen angepasst und entsprechend flexibel verwendet werden. Darüber hinaus ist im Unterschied zum Stand der Technik kein aufwändiges und ortsgebundenes Schienensystem oder dergleichen für die Handhabung der Triebwerkbauteile bzw. der Gasturbine erforderlich. Beispielsweise kann das Montagesystem in unterschiedlichen Bereichen einer Fertigungshalle verwendet werden, ohne dass hierzu bauliche Änderungen der Fertigungshalle erforderlich wären. Ebenso kann das Montagesystem schnell an unterschiedliche Fertigungsorte transportiert und dort zur Handhabung von Triebwerkbauteilen bzw. Gasturbinen verwendet werden. Durch den ersten und zweiten Führungswagen können das erste und zweite Triebwerkbauteil einerseits gehalten und andererseits bodengebunden ohne die Notwendigkeit von Schienensystem oder Ähnlichem transportiert werden. Ein Triebwerksbauteil kann beispielsweise ein Niederdruckturbinen-Modul, Niederdruckverdichter-Modul und/oder ein Fan-Modul sein. Mit Hilfe des Verbindungsmoduls ist es zusätzlich möglich, den ersten und zweiten Führungswagen lösbar miteinander in einer definierten relativen Ausrichtung zu verbinden. Hierdurch können das erste und zweite Triebwerkbauteil nicht nur einzeln, sondern auch gemeinsam transportiert, montiert bzw. demontiert und repariert bzw. gewartet werden. Darüber hinaus ist hierdurch eine einfache Möglichkeit geschaffen, das erste und zweite Triebwerkbauteil definiert zueinander auszurichten. Die zum lösbaren Verbinden des Verbindungsmoduls mit den Führungswagen vorgesehenen Kopplungsmittel sind dabei grundsätzlich nicht auf eine bestimmte Ausführungsform beschränkt, solange sie ein reversibles Koppeln und Entkoppeln des Verbindungsmoduls mit dem ersten bzw. zweiten Führungswagen erlauben. Beispielsweise können das Verbindungsmodul und die Führungswagen Stifte, Dornen, Hebel, Aufnahmeöffnungen, Schrauben, Gewinde, Bügel, Gabelfallen, Riegel, Klinken, Schlösser, Rastelemente etc. umfassen. Vorzugsweise sind die Kopplungsmittel derart ausgebildet, dass sie neben einem reversiblen Koppeln auch eine definierte räumliche Anordnung zwischen dem Verbindungsmodul und den Führungswagen sicherstellen, beispielsweise durch Verwendung von einem oder mehreren Zentrierstiften und korrespondierenden Zentrieröffnungen. Ebenso können Einstellmittel vorgesehen sein, die eine Einstellung der relativen räumlichen Anordnung von Verbindungsmodul und Führungswagen ermöglichen. Zum räumlichen Ausrichten können zudem Markierungen, optische Peileinrichtungen wie Laserpeilsysteme und dergleichen vorgesehen sein.

In einer vorteilhaften Ausgestaltung der Erfindung ist vorgesehen, dass das Montagesystem wenigstens eine Haltevorrichtung zum lösbaren Halten zumindest eines Kernmoduls der Gasturbine umfasst. Dies ermöglicht es, ein zusätzliches Modul der Gasturbine bei der Montage bzw. Demontage oder Wartung mit Hilfe des erfindungsgemäßen Montagesystems handzuhaben. Beispielsweise kann bzw. können das erste und/oder zweite Triebwerkbauteil mit einem solchen Kernmodul verbunden werden. Dazu sind vorzugsweise der erste bzw. zweite Führungswagen sowie das Verbindungsmodul derart an die Geometrie des Kernmoduls angepasst, dass das erste bzw. zweite Triebwerkbauteil mit dem Kernmodul verbunden werden kann, wenn der erste bzw. zweite Führungswagen mit dem Verbindungsmodul gekoppelt ist.

Weitere Vorteile ergeben sich, wenn wenigstens eine Haltevorrichtung zum Anheben und Absenken des Kernmoduls relativ zur Haltevorrichtung ausgebildet ist und/oder Positionierungsmittel zum Einstellen einer räumlichen Orientierung des Kernmoduls relativ zur Haltevorrichtung umfasst und/oder dass die Haltevorrichtung verfahrbar ausgebildet ist. Hierdurch werden die Handhabbarkeit des Kernmoduls und der Haltevorrichtung zusätzlich erleichtert und verbessert, wodurch entsprechend einfachere, schnellere und betriebssicherere Montage-, Demontage und Wartungsschritte durchgeführt werden können. Indem Positionierungsmittel zum Einstellen einer räumlichen Orientierung vorgesehen sind, kann beispielsweise eine bestimmte Bauteilachse des Kernmoduls fluchtend mit einer korrespondierenden Bauteilachse eines der Triebwerkbauteile oder anderer Gasturbinenelemente angeordnet werden, wodurch insbesondere anschließende Montage- oder Demontageschritte ohne die Gefahr von Verspannungen oder Beschädigungen durchführbar sind

Indem das Verbindungsmodul und die Haltevorrichtung über korrespondierende Kopplungsmittel lösbar miteinander verbindbar sind, kann die relative Lage des Kernmoduls zum Verbindungsmodul und damit zu den mit dem Verbindungsmodul gekoppelten Führungswagen bzw. den an den Führungswagen angeordneten Triebwerkbauteilen besonders betriebssicher eingestellt und festgelegt werden. Auch in diesem Fall sind die zum lösbaren Verbinden des Verbindungsmoduls mit der Haltevorrichtung vorgesehenen Kopplungsmittel grundsätzlich nicht auf eine bestimmte Ausführungsform beschränkt, solange sie ein reversibles Koppeln und Entkoppeln erlauben. Beispielsweise können das Verbindungsmodul und die Haltevorrichtung entsprechende Stifte, Dornen, Hebel, Aufnahmeöffnungen, Schrauben, Gewinde, Bügel, Gabelfallen, Riegel, Klinken, Schlösser, Rastelemente etc. umfassen. Vorzugsweise sind die Kopplungsmittel derart ausgebildet, dass sie neben einem reversiblen Koppeln auch die definierte räumliche Lage zwischen dem Verbindungsmodul und der Haltevorrichtung sicherstellen. Ebenso können Einstellmittel vorgesehen sein, die eine Einstellung der relativen räumlichen Anordnung von Verbindungsmodul und Haltevorrichtung ermöglichen. Zum räumlichen Ausrichten können auch hier Markierungen, optische Peileinrichtungen wie Laserpeilsysteme und dergleichen vorgesehen sein.

In einer weiteren vorteilhaften Ausgestaltung der Erfindung ist vorgesehen, dass der erste Führungswagen und/oder der zweite Führungswagen eine Ringhalterung zum lösbaren Fixieren eines Montagerings des ersten bzw. zweiten Triebwerkbauteils und/oder eine Hebeeinrichtung zum Anheben und Absenken des ersten bzw. zweiten Triebwerkbauteils relativ zum ersten bzw. zweiten Führungswagen und/oder Antriebsmittel zum Drehen des ersten bzw. zweiten Triebwerkbauteils relativ zum ersten bzw. zweiten Führungswagen und/oder Positionierungsmittel zum Einstellen einer räumlichen Orientierung des ersten bzw. zweiten Triebwerkbauteils relativ zum ersten bzw. zweiten Führungswagen umfasst. Eine Ringhalterung bietet die Möglichkeit, den Führungswagen unter dem Montagering des betreffenden Triebwerkbauteils zu positionieren und dann den Montagering in der Ringhalterung anzuordnen und vorzugsweise beispielsweise durch Klammern, Rollen oder dergleichen am Führungswagen lagezusichern. Hierdurch kann das betreffende Triebwerkbauteil einerseits am Führungswagen befestigt, andererseits aber weiterhin um mindestens eine Mittelachse des Montagerings gedreht werden. Mit Hilfe einer Hebeeinrichtung zum Anheben und Absenken des ersten bzw. zweiten Triebwerkbauteils relativ zum ersten bzw. zweiten Führungswagen kann der Abstand des betreffenden Triebwerkbauteils zum Boden eingestellt werden. Dies vereinfacht die Zugänglichkeit und damit die Montage bzw. Demontage des betreffenden Triebwerkbauteils. Vorzugsweise umfasst die Hebeeinrichtung die Ringhalterung. Indem Antriebsmittel zum Drehen des ersten bzw. zweiten Triebwerkbauteils relativ zum ersten bzw. zweiten Führungswagen vorgesehen sind, kann das betreffende Triebwerkbauteil - gegebenenfalls zusammen mit bereits verbundenen weiteren Bauteilen der Gasturbine - gedreht werden, wodurch eine besonders gute Zugänglichkeit für einen Monteur erreicht wird. Mit Hilfe von Positionierungsmitteln zum Einstellen einer räumlichen Orientierung des ersten bzw. zweiten Triebwerkbauteils relativ zum ersten bzw. zweiten Führungswagen ist eine weitere Verbesserung der Montage, Demontage und Wartung geschaffen.

In einer weiteren vorteilhaften Ausgestaltung der Erfindung sind Synchronisierungsmittel vorgesehen sind, mittels welchen die Hebeeinrichtungen des ersten und des zweite Führungswagens, wenn sie über das Verbindungsmodul miteinander verbunden sind, synchron bewegbar sind. Unter einer synchronen Bewegung wird im Rahmen der vorliegenden Erfindung eine zeitlich und räumlich aufeinander abgestimmte, gleichmäßige Bewegung verstanden, so dass Verspannungen beim Bewegen auch bei bereits miteinander verbundenen Gasturbinenbauteilen zuverlässig verhindert werden.

Weitere Vorteile ergeben sich, indem das Montagesystem einen dritten Führungswagen zum Halten eines dritten Triebwerkbauteils, insbesondere eines Fan-Moduls der Gasturbine umfasst, wobei der dritte Führungswagen durch korrespondierende Haltemittel lösbar mit dem Verbindungsmodul verbindbar ist. Dies erlaubt es, zusätzliche Triebwerkbauteile, die sich darüber hinaus beispielsweise in ihren räumlichen Dimensionen stark von den ersten oder zweiten Triebwerkbauteilen unterscheiden können, mit Hilfe des dritten Führungswagens zu transportieren bzw. handzuhaben. Vorzugsweise entsprechend die Haltemittel des dritten Führungswagens den Haltemitteln des zweiten Führungswagens, so dass der zweite Führungswagen nach der Montage des zweiten Triebwerkbauteils vom Verbindungsmodul abgekoppelt und der dritte Führungswagen mit dem dritten Triebwerkbauteil stattdessen an das Verbindungsmodul angekoppelt werden kann, um das dritte Triebwerkbauteil zu montieren oder zu warten. Die Demontage des dritten Triebwerkbauteils verläuft entsprechend umgekehrt.

Weitere Vorteile ergeben sich dadurch, dass der dritte Führungswagen verstellbare und/oder motorisch antreibbare Räder und/oder eine Ringhalterung zum lösbaren Fixieren eines Montagerings des dritten Triebwerkbauteils und/oder eine Hebeeinrichtung zum Anheben und Absenken des dritten Triebwerkbauteils relativ zum dritten Führungswagen und/oder Antriebsmittel zum Drehen des dritten Triebwerkbauteils relativ zum dritten Führungswagen und/oder Positionierungsmittel zum Einstellen einer räumlichen Orientierung des dritten Triebwerkbauteils relativ zum dritten Führungswagen umfasst. Mit Hilfe von Räder oder Rollen kann der dritte Führungswagen bewegt werden, ohne dass es zu Verspannungen oder sonstigen mechanischen Beanspruchungen des dritten Triebwerkbauteils kommt. Verstellbare Räder oder Rollen erlauben dabei einen Ausgleich von Bodenunebenheiten. Motorisch antreibbare Räder oder Rollen vereinfachen das Bewegen des dritten Führungswagens und ermöglichen ebenfalls ein ferngesteuertes und/oder autonomes Verfahren. Mit Hilfe der Hebeeinrichtung zum Anheben und Absenken des dritten Triebwerkbauteils relativ zum dritten Führungswagen kann der Abstand des dritten Triebwerkbauteils zum Boden optimal für anschließende Montage-, Demontage- oder Wartungsarbeiten positioniert werden. Das Vorsehen von Antriebsmitteln zum Drehen des dritten Triebwerkbauteils relativ zum dritten Führungswagen ermöglicht einen vollumfänglichen Zugang auf das dritte Triebwerkbauteil und vereinfacht damit ebenfalls bestimmte Montage-, Demontage- oder Wartungsarbeiten. Indem Positionierungsmittel zum Einstellen einer räumlichen Orientierung des dritten Triebwerkbauteils relativ zum dritten Führungswagen vorgesehen sind, kann beispielsweise eine bestimmte Bauteilachse des dritten Triebwerkbauteils fluchtend mit einer korrespondierenden Bauteilachse der Gasturbine oder anderer Gasturbinenelemente angeordnet werden, wodurch insbesondere anschließende Montage- oder Demontageschritte ohne die Gefahr von Verspannungen oder Beschädigungen durchführbar sind.

In einer weiteren vorteilhaften Ausgestaltung der Erfindung ist vorgesehen, dass das Verbindungsmodul und wenigstens einer der Führungswagen im verbundenen Zustand mittels einer Dämpfungseinrichtung und/oder einer Gelenkeinrichtung nur innerhalb eines vorgegebenen Winkelbereichs relativ zueinander verschwenkbar sind. Hierdurch können etwaige Verspannungen und Verwindungen zwischen den Triebwerkbauteilen bzw. zwischen den Triebwerkbauteilen und dem Kernmodul, beispielsweise aufgrund von Bodenunebenheiten, Fertigungstoleranzen und dergleichen, zuverlässig ausgeglichen werden, so dass eine spannungsfreie Montage bzw. Demontage der einzelnen Bauteile der Gasturbine sowie ein spannungsfreier Transport sichergestellt sind. Die wenigstens eine Dämpfungs- und/oder Gelenkeinrichtung beschränkt beispielsweise eine relative Pendelbewegung zwischen dem Verbindungsmodul und dem angrenzenden Führungswagen auf einen Winkelbereich von ±0,5°, ±1°, ±2°, ±3°, ±4°, ±5° usw., wobei unterschiedliche Dämpfungs- und/oder Gelenkeinrichtungen grundsätzlich gleiche oder unterschiedliche Winkelbereiche beschränken können.

In einer weiteren vorteilhaften Ausgestaltung der Erfindung ist vorgesehen, dass das Verbindungsmodul wenigstens eine Rolle umfasst, die Bodenkontakt besitzt, wenn das Verbindungsmodul mit weniger als zwei der Führungswagen verbunden ist, und/oder die keinen Bodenkontakt besitzt, wenn das Verbindungsmodul mit mindestens zwei der Führungswagen verbunden ist. Mit anderen Worten kann das Verbindungsmodul mit Hilfe der wenigstens einen Rolle auf dem Boden verschoben werden, solange noch nicht zwei oder mehr Führungswagen angekoppelt sind. Sobald zwei oder mehr Führungswagen angekoppelt sind, besitzt das Verbindungsmodul bzw. seine wenigstens eine Rolle dagegen keinen Bodenkontakt mehr. Hierdurch wird sichergestellt, dass das Verbindungsmodul im angekoppelten Zustand der Führungswagen nicht individuell bewegbar ist und damit die Bewegbarkeit der Führungswagen nicht behindert. Die wenigstens eine Rolle kann hierzu beispielsweise höhenverstellbar ausgebildet sein. Alternativ oder zusätzlich kann vorgesehen sein, dass der erste und/oder zweite Führungswagen eine Kulissenführung aufweist, in welche das Verbindungsmodul bzw. dessen Rad oder Rolle beim Koppeln eingeführt wird und das Rad oder die Rolle vom Boden abhebt.

In weiterer Ausgestaltung der Erfindung umfasst wenigstens einer der Führungswagen eine steuer- und/oder regelbare Antriebseinrichtung zum motorunterstützten Bewegen. Dies vereinfacht und erleichtert den Transport des betreffenden Triebwerkbauteils. Dabei kann es grundsätzlich vorgesehen sein, dass der Führungswagen über eine Antriebseinrichtung verfügt, die ein oder mehrere Räder oder Rollen des Führungswagens antreiben kann. Alternativ kann der betreffende Führungswagen mehrere Antriebseinrichtungen umfassen, die auf unterschiedliche Räder oder Rollen wirken und/oder über ein Getriebe koppelbar sind. Eine steuer- und/oder regelbare Antriebseinrichtung ermöglicht es zudem, den Führungswagen ferngesteuert und/oder autonom bewegbar auszubilden.

In einer weiteren vorteilhaften Ausgestaltung der Erfindung sind Synchronisierungsmittel vorgesehen, mittels welchen die Antriebseinrichtungen von wenigstens zwei Führungswagen derart ansteuerbar sind, dass die Führungswagen, wenn sie über das Verbindungsmodul miteinander verbunden sind, synchron bewegbar sind. Mit anderen Worten ist es erfindungsgemäß vorgesehen, dass der erste, zweite und/oder gegebenenfalls dritte Führungswagen unabhängig voneinander bewegbar sind, wenn nur einer von ihnen mit dem Verbindungsmodul gekoppelt ist, dass sie aber nur synchron bewegbar sind, wenn zwei oder mehr von ihnen mit dem Verbindungsmodul gekoppelt sind. Dies stellt einen verspannungsfreien Transport der Triebwerkbauteils bzw. der Gasturbine sicher. Zum Synchronisieren kann es beispielsweise vorgesehen sein, dass das Verbindungsmodul entsprechende drahtlose und/oder drahtgebundene Schnittstellen für die Führungswagen bereitstellt. Sobald mindestens zwei Führungswagen mit dem Verbindungsmodul gekoppelt sind, kann - manuell und/oder automatisiert - eine entsprechende Verbindung zwischen den Führungswagen über das Verbindungsmodul mit einer Synchronisierung der Ansteuerung der jeweiligen Antriebseinrichtung erfolgen.

Ein zweiter Aspekt der Erfindung betrifft ein Verfahren zum zumindest teilweisen Montieren einer Gasturbine. Das erfindungsgemäße Verfahren umfasst dabei zumindest die Schritte Bereitstellen eines ersten Triebwerkbauteils, insbesondere eines Turbinenmoduls der Gasturbine, eines zweiten Triebwerkbauteils, insbesondere eines Verdichtermoduls der Gasturbine, und eines Kernmoduls der Gasturbine, Befestigen des ersten Triebwerkbauteils an einem ersten Endbereich des Kernmoduls und Befestigen des zweiten Triebwerkbauteils an einem zweiten Endbereich des Kernmoduls, wobei das erste Triebwerkbauteil mittels eines ersten Führungswagens und das zweite Triebwerkbauteil mittels eines zweiten Führungswagens gehalten wird und der erste Führungswagen und der zweite Führungswagen lösbar über ein Verbindungsmodul miteinander gekoppelt werden. Wenigstens einer der Führungswagen umfasst eine Triebwerkaufnahme, mittels welcher das zugeordnete Triebwerkbauteil außerhalb seines Massenmittelpunktes um drei Achsen drehbar gelagert wird, und wenigstens einer der Führungswagen umfasst eine Triebwerkaufnahme, mittels welcher das zugeordnete Triebwerkbauteil translatorisch entlang wenigstens einer Achse bewegt wird. Dies ermöglicht das spannungsfreie Transportieren. Montieren, eine Demontieren und Warten der Gasturbine. Das erfindungsgemäße Verfahren erlaubt damit einfachere und flexiblere Handhabung der Triebwerkbauteile und eine entsprechend verbesserte Montage der Gasturbine. Es versteht sich, dass auch eine Demontage, bei der die Schritte in umgekehrter Reihenfolge durchgeführt werden, entsprechend vereinfacht wird. Vorzugsweise wird das erfindungsgemäße Verfahren mit Hilfe eines Montagesystems gemäß dem ersten Erfindungsaspekt durchgeführt. Insbesondere sind vorteilhafte Ausgestaltungen des ersten Erfindungsaspekts als vorteilhafte Ausgestaltungen des zweiten Erfindungsaspekts und umgekehrt anzusehen. Grundsätzlich kann es dabei vorgesehen sein, dass das erste und/oder zweite Triebwerkbauteil zunächst beispielsweise mit Hilfe eines Krans am Kernmodul befestigt und anschließend mit dem ersten bzw. zweiten Führungswagen gehalten wird, um weitere Montageschritte durchzuführen. Alternativ kann aber auch vorgesehen sein, dass das erste und/oder zweite Triebwerkbauteil zunächst am ersten bzw. zweiten Führungswagen angeordnet und anschließend mit Hilfe des betreffenden Führungswagens mit dem Kernmodul verheiratet bzw. verbunden wird, wonach gegebenenfalls weitere Montage- und/oder Wartungsschritte durchgeführt werden können.

In einer vorteilhaften Ausgestaltung der Erfindung ist vorgesehen, dass am ersten und/oder am zweiten Triebwerkbauteil ein Montagering befestigt und in einer Ringhalterung des ersten bzw. des zweiten Führungswagens lösbar fixiert wird. Hierdurch werden die Freiheitsgrade des ersten und/oder zweiten Triebwerkbauteils eingeschränkt, wobei aber insbesondere ein Verdrehen um eine Hauptachse des Montagerings weiterhin möglich bleibt. Alternativ oder zusätzlich ist es vorgesehen, dass zumindest das erste und/oder zweite Triebwerkbauteil relativ zum ersten bzw. zweiten Führungswagen mittels einer Hebeeinrichtung angehoben und/oder abgesenkt wird. Dies ermöglicht eine translatorische Bewegung des ersten und/oder zweiten Triebwerkbauteils, um seinen jeweiligen Abstand vom Boden einzustellen. Alternativ oder zusätzlich ist es vorgesehen, dass zumindest das erste bzw. zweite Triebwerkbauteil durch Antriebsmittel relativ zum ersten bzw. zweiten Führungswagen gedreht wird. Dies ermöglicht es, den gesamten Außenumfang für Montage-, Demontage- oder Wartungsarbeiten zugänglich zu machen. Alternativ oder zusätzlich ist es vorgesehen, dass eine räumlichen Orientierung zumindest des ersten bzw. zweiten Triebwerkbauteils durch Positionierungsmittel relativ zum ersten bzw. zweiten Führungswagen eingestellt wird. Hierdurch kann das erste und/oder zweite Triebwerkbauteil rotatorisch und/oder translatorisch bezüglich des betreffenden Führungswagens bewegt werden, um eine optimale Ausrichtung zu anderen Bauteilen der Gasturbine sicherzustellen.

Ein drittes Triebwerkbauteil kann gemäß einer weiteren vorteilhaften Ausgestaltung der Erfindung durch die zusätzlichen Schritte Abkoppeln des zweiten Führungswagens vom Verbindungsmodul nach dem Befestigen des zweiten Triebwerkbauteils am Kernmodul, Halten eines dritten Triebwerkbauteils, insbesondere ein Fan-Moduls der Gasturbine, mittels eines dritten Führungswagens, lösbares Koppeln des dritten Führungswagens mit dem Verbindungsmodul und Befestigen des dritten Triebwerkbauteils am zweiten Triebwerkbauteil und/oder am Kernmodul montiert werden. Die Demontage kann in entsprechend umgekehrter Reihenfolge durchgeführt werden.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine Prinzipdarstellung einer teilweise oder vollständig montierten Gasturbine während des Be- und Entladens bzw. ihrer Montage oder Demontage mittels eines erfindungsgemäßen Montagesystems;
- Fig. 2: eine Prinzipdarstellung der teilweise oder vollständig montierten Gasturbine während der Durchführung von Transport-, Montage-, Demontage- und/oder Wartungsschritten;
- Fig. 3: eine Perspektivdarstellung eines Ausführungsbeispiels eines Verbindungsmoduls des Montagesystems;
- Fig. 4: eine Perspektivdarstellung eines ersten Ausführungsbeispiels einer Haltevorrichtung des Montagesystems;
- Fig. 5: eine Schnittansicht eines Gelenklagers der in Fig. 4 gezeigten Haltevorrichtung;
- Fig. 6: eine vordere Perspektivansicht eines Ausführungsbeispiels eines ersten Führungswagens zum Halten eines ersten Triebwerkbauteils;
- Fig. 7: eine hintere Perspektivansicht des ersten Führungswagens;
- Fig. 8: eine schematische Schnittansicht eines Pendelrollenlagers des ersten Führungswagens;
- Fig. 9: eine vordere Perspektivansicht eines Ausführungsbeispiels eines zweiten Führungswagens zum Halten eines zweiten Triebwerkbauteils;
- Fig. 10: eine vordere Perspektivansicht des zweiten Führungswagens;
- Fig. 11: eine schematische Schnittansicht eines Lagers des zweiten Führungswagens zur Anordnung eines zweiten Montageringtyps des zweiten Triebwerkbauteils;
- Fig. 12: eine Perspektivdarstellung eines zweiten Ausführungsbeispiels der Haltevorrichtung;
- Fig. 13: eine schematische und ausschnittsweise Schnittansicht der in Fig. 12 gezeigten Haltevorrichtung;
- Fig. 14: eine hintere Perspektivansicht eines Ausführungsbeispiels eines dritten Führungswagens zum Halten eines dritten Triebwerkbauteils;
- Fig. 15: eine weitere hintere Perspektivansicht des dritten Führungswagens;
- Fig. 16: eine Perspektivansicht eines mittels der in Fig. 4 gezeigten Haltevorrichtung gehaltenen Kernmoduls einer Gasturbine, an welches zwei Triebwerkbauteile montiert werden;
- Fig. 17: eine Perspektivansicht der teilweise montierten Gasturbine während eines folgenden Montageschritts;
- Fig. 18: eine Perspektivansicht der teilweise montierten Gasturbine, bei welcher Montageringe an das erste und das zweite Triebwerkbauteil montiert und durch den ersten bzw. zweiten Führungswagen gehalten sind;
- Fig. 19: eine Perspektivansicht der teilweise montierten Gasturbine, wobei die Haltevorrichtung entfernt und die teilweise montierte Gasturbine mit Hilfe von jeweiligen Hebeeinrichtungen des ersten und zweiten Führungswagens angehoben ist;
- Fig. 20: eine Perspektivansicht der teilweise montierten Gasturbine, wobei die Haltevorrichtung entfernt und die teilweise montierte Gasturbine mit Hilfe von jeweiligen Hebeeinrichtungen des ersten und zweiten Führungswagens abgesenkt ist;
- Fig. 21: eine Perspektivansicht der teilweise montierten Gasturbine, wobei die Haltevorrichtung gemäß dem zweiten Ausführungsbeispiel am Kernmodul befestigt und der zweite Führungswagen vom Verbindungsmodul abgekoppelt ist;
- Fig. 22: eine Perspektivansicht der teilweise montierten Gasturbine, wobei ein drittes Triebwerkbauteil mittels eines dritten Führungswagens angeliefert wird; und
- Fig. 23: eine Perspektivansicht der montierten Gasturbine, wobei die Haltevorrichtung entfernt und das dritte Triebwerkbauteil montiert ist.

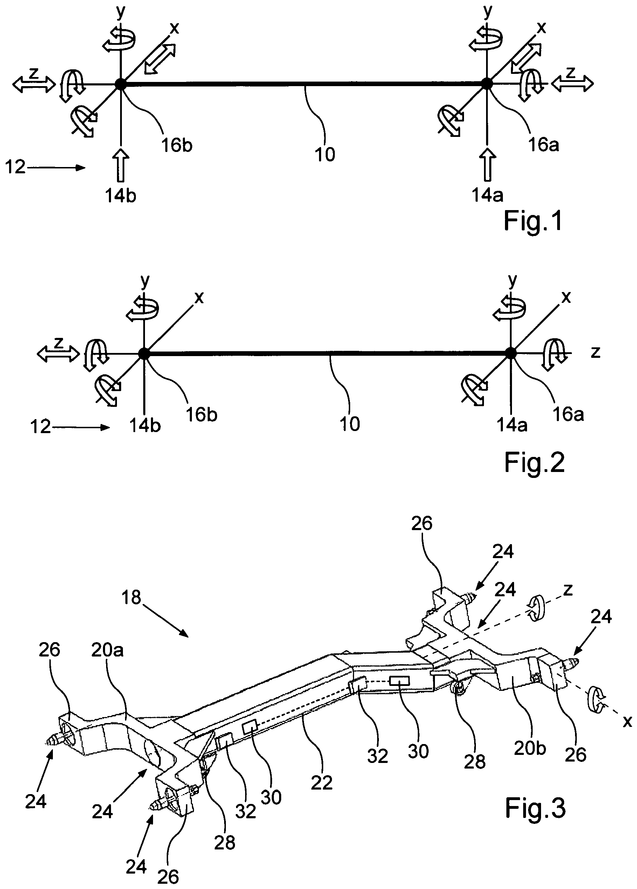

Fig. 1 zeigt eine perspektivische Prinzipdarstellung einer teilweise oder vollständig montierten Gasturbine 10, beispielsweise eines Flugtriebwerks oder einer Turbine zur Stromerzeugung, während des Be- und Entladens bzw. ihrer Montage oder Demontage mittels eines erfindungsgemäßen Montagesystems 12. Das bodengebundene Montagesystem 12 umfasst dabei einen ersten Führungswagen 14a zum Halten eines ersten Triebwerkbauteils 16a, bei dem es sich im vorliegenden Fall um ein Niederdruck-Turbinenmodul (Low Pressure Turbine Module, LPT) der Gasturbine 10 handelt. Weiterhin umfasst das Montagesystem 12 einen zweiten Führungswagen 14b zum Halten eines zweiten Triebwerkbauteils 16b, bei dem es sich beispielsweise um ein Verdichter- bzw. Niederdruckverdichter-Modul (Fan Drive Compressor, FDC) handeln kann. Ebenso kann an dieser Stelle ein Fan-Modul der Gasturbine 10 vorgesehen sein. Man erkennt, dass das Montagesystem 12 verschiedene translatorische und rotatorische Freiheitsgrade bereitstellt und damit einen verwindungs- und spannungsfreien Transport sowie eine verwindungs- bzw. spannungsfreie Handhabung der teilweise oder vollständig montierten Gasturbine 10 erlaubt. Ein Kernaspekt des erfindungsgemäßen Montagesystems 12 besteht dabei darin, dass die teilweise oder vollständig montierte Gasturbine 10 an ihren gegenüberliegenden Endbereichen am ersten bzw. zweiten Führungswagen 14a, 14b fixiert ist, wobei die Führungswagen 14a, 14b wahlweise unabhängig voneinander bewegbar sind und grundsätzlich direkt oder über ein in Fig. 1 nicht dargestelltes Verbindungsmodul 18 (s. Fig. 3) lösbar miteinander gekoppelt werden können. Insbesondere ermöglicht das erfindungsgemäße Montagesystem 12 das gezielte Sperren oder Freigeben translatorischer und/oder rotatorischer Freiheitsgrade. Im in Fig. 1 gezeigten Zustand ermöglicht das Montagesystem 12 eine translatorische Bewegung der einzelnen Triebwerkbauteile 16a, 16b entlang einer x-, y- und z-Achse, wobei x eine parallel zum Boden verlaufende Achse, y eine senkrecht auf dem Boden stehende Achse (Hochachse) und z eine koaxial bzw. achsparallel zu einer Turbinenachse der Gasturbine 10 angeordnete Achse (Turbinenachse) bezeichnen. Darüber hinaus erlaubt das Montagesystem 12 eine rotatorische Bewegung der einzelnen Triebwerkbauteile 16a, 16b um die x-, y- und z-Achse. Das Verbindungsmodul 18 umfasst grundsätzlich optionale Dämpfungs- und/oder Gelenkeinrichtungen, die relative Pendelbewegungen zwischen dem ersten bzw. zweiten Führungswagen 14a, 14b und dem Verbindungsmodul 18 auf einen Winkelbereich von ±5° oder mehr beschränken und dämpfen. Hierdurch können beispielsweise Bodenunebenheiten beim Transport oder der Montage bzw. Demontage optimal ausgeglichen und unerwünschte mechanische Belastungen zuverlässig vermieden werden. Ebenso können die teilweise oder vollständig montierte Gasturbine 10 bzw. die einzelnen Triebwerkbauteile 16a, 16b verwindungsfrei angehoben, abgesenkt und gedreht werden.

Fig. 2 zeigt eine perspektivische Prinzipdarstellung der teilweise oder vollständig montierten Gasturbine 10 während der Durchführung von Transport-, Montage-, Demontage- und/oder Wartungsschritten. Man erkennt, dass im Unterschied zum in Fig. 1 gezeigten Zustand verschiedene Freiheitsgrade mittels des Montagesystems 12 gesperrt sind. So wird nur noch eine translatorische Bewegbarkeit des zweiten Triebwerkbauteils 16b in axialer Richtung (z-Achse) erlaubt, während alle anderen translatorischen Freiheitsgrade gesperrt sind. Demgegenüber sind weiterhin rotatorische Bewegungen sowohl des ersten als auch des zweiten Triebwerkbauteils 16a, 14b um die x-, y- und z-Achse möglich. Hierdurch kann die Gasturbine 10 um einen Winkelbereich von beispielsweise ±0,5°, ±1,0°, ±1,5°, ±2,0°, ±2,5°, ±3,0°, ±3,5°, ±4,0°, ±4,5°, ±5,0° usw. relativ vom ersten Führungswagen 14a zum zweiten bzw. dritten Führungswagen 14b, 14c spannungsfrei pendeln. Dies ist wichtig, um bei auftretenden Bewegungen wie beim Verfahren über Bodenunebenheiten, beim Heben/Senken oder Drehen die Gasturbine 10 nicht zu verspannen oder beschädigen. Somit können Montage-, Demontage- oder Wartungsarbeiten am Außenumfang der Gasturbine 10 durchgeführt werden, wobei eine translatorische Bewegung der Gasturbine 10 bzw. ihrer einzelnen Bauteile nur noch an einem Endbereich (FDC/Fan) in Richtung der Turbinenachse (z-Achse) möglich ist.

Fig. 3 zeigt eine Perspektivdarstellung eines Ausführungsbeispiels des Verbindungsmoduls 18 des Montagesystems 12. Man erkennt, dass das Verbindungsmodul 18 zwei im Wesentlichen U-förmige Querstreben 20a, 20b umfasst, die über eine Mittelstrebe 22 miteinander verbunden sind. Die Mittelstrebe 22 weist im vorliegenden Ausführungsbeispiel einen grundsätzlich optionalen Knick auf, so dass die Querstreben 20a, 20b bezogen auf den Boden in unterschiedlichen Höhen (y-Achse) angeordnet sind. Hierdurch wird zur Erleichterung von Montage- und Wartungsarbeiten den unterschiedlichen Durchmessern von Niederdruckturbinen-Modulen und Fan-Modulen Rechnung getragen. Anstelle eines Knicks sind natürlich auch andere geometrische Gestaltungen wie Treppen, Kurven etc. denkbar. Die Querstreben 20a, 20b umfassen Kopplungsmittel, die allgemein mit dem Bezugszeichen 24 gekennzeichnet sind und die mit korrespondierenden Kopplungsmitteln 24 an den Führungswagen 14 zusammenwirken, um eine lösbare Kopplung zu ermöglichen. Im gezeigten Ausführungsbeispiel umfassen die Querstreben 20a, 20b als Kopplungsmittel 24 jeweils zwei seitliche Montageschrauben, die in korrespondierende Montageöffnungen der Führungswagen 14 eingeführt und verschraubt werden können.

Grundsätzlich kann es vorgesehen sein, dass das Verbindungsmodul 18 und der jeweils angekoppelte Führungswagen 14 nur innerhalb eines vorgegebenen Winkelbereichs relativ zueinander verschwenkbar sind. Hierdurch können etwaige Verspannungen und Verwindungen zwischen den Führungswagen 14a-c, beispielsweise aufgrund von Bodenunebenheiten, Fertigungstoleranzen und dergleichen, zuverlässig ausgeglichen werden, wodurch eine spannungsfreie Montage bzw. Demontage der einzelnen Elemente der Gasturbine 10 sichergestellt ist. Zu diesem Zweck kann das Verbindungsmodul 18 grundsätzlich optionale Dämpfungseinrichtungen 26 umfassen, die eine relative Pendelbewegung zwischen dem Verbindungsmodul 18 und dem betreffenden Führungswagen 14 auf einen bestimmten Winkelbereich, beispielsweise auf ±2° beschränken und die relative Bewegung dämpfen. Im gezeigten Ausführungsbeispiel sind die seitlichen Enden der Querstreben 20a, 20b pendelnd gelagert (± 2° um z-Achse), so dass die als Kopplungsmittel 24 dienenden Montageschrauben geringfügig verschwenkbar sind.

Wie man in Fig. 3 weiterhin erkennt, umfasst das Verbindungsmodul 18 im Bereich der Querstreben 20a, 20b mehrere, insbesondere vier verschwenkbare Rollen 28, die Bodenkontakt besitzen, wenn das Verbindungsmodul 18 mit weniger als zwei der Führungswagen 14 verbunden ist. Hierdurch kann das Verbindungsmodul 18 im abgekoppelten Zustand auf dem Boden frei verschoben und einfach transportiert werden. Ein motorischer Antrieb ist möglich, aber generell nicht zwingend erforderlich. Beim Koppeln des Verbindungsmoduls 18 mit einem Führungswagen 14 wird die zugeordnete Rolle(n) 28 vom Boden abgehoben, um die Bewegung des betreffenden Führungswagens 14 nicht zu behindern. Dies kann beispielsweise dadurch erfolgen, dass das Verbindungsmodul 18 in eine entsprechende Führungskulisse eingeschoben wird. Alternativ können die Rollen 28 auch in der Höhe verstellbar, einklappbar oder sogar vom Verbindungsmodul 18 abnehmbar sein.

Weiterhin umfasst das Verbindungsmodul 18 grundsätzlich optionale Synchronisierungsmittel 30, mittels welchen Antriebseinrichtungen (nicht gezeigt) der Führungswagen 14 derart ansteuerbar sind, dass die Führungswagen 14, wenn sie über das Verbindungsmodul 18 miteinander verbunden sind, nur synchron bewegbar sind. Zu diesem Zweck werden entsprechende Verbindungsstecker (nicht gezeigt) der Führungswagen 14 nach dem Ankoppeln in zugeordnete Steckplätze (30) am Verbindungsmodul 18 gesteckt. Dies kann manuell oder automatisch beim Ankoppeln erfolgen. Sobald zwei oder mehr Führungswagen 14 angekoppelt sind, werden deren Antriebseinrichtungen mit Hilfe der Synchronisierungsmittel 30 derart angesteuert, dass die miteinander verbundenen Elemente des Montagesystems 12 nur aufeinander abgestimmt bzw. als ein Fahrzeug bewegbar sind. Auch hierdurch wird zuverlässig sichergestellt, dass keine unzulässigen mechanischen Beanspruchungen der teilweise oder vollständig montierten Gasturbine 10 auftreten. Anstelle von kabelgebundenen Synchronisierungsmitteln 30 können grundsätzlich auch drahtlose Kopplungen vorgesehen sein, die jedoch aus Gründen der Störanfälligkeit weniger bevorzugt sind.

Weiterhin umfasst das Verbindungsmodul 18 seitliche Positionierungsmittel 32, die zur Ausrichtung an einer in den folgenden Figuren gezeigten Haltevorrichtung 34 dienen. Die Positionierungsmittel 32 können Schalter umfassen, die bei erfolgreicher Kopplung aktiviert und bei nicht erfolgter Kopplung deaktiviert sind oder umgekehrt.

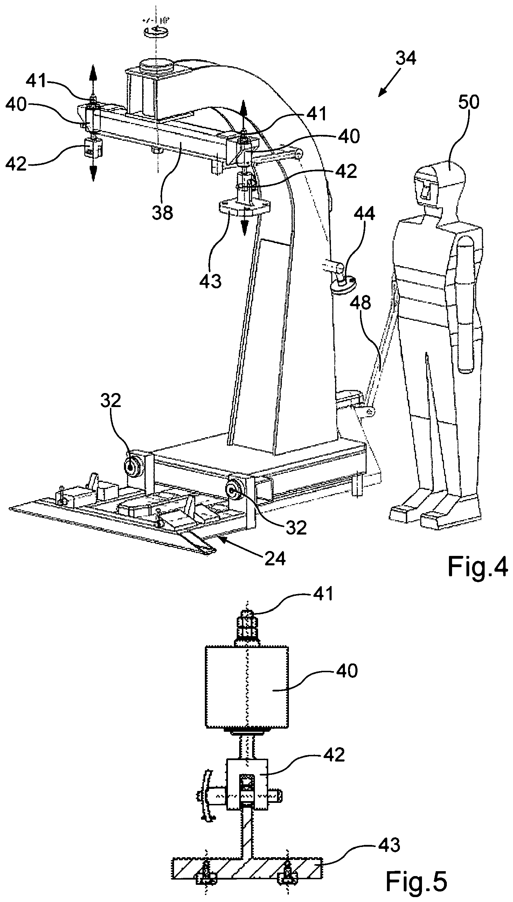

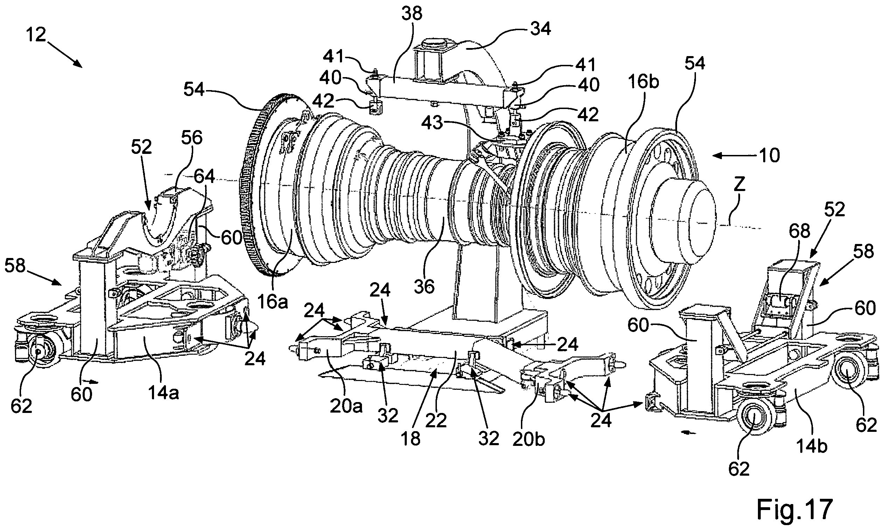

Fig. 4 zeigt eine Perspektivdarstellung eines ersten Ausführungsbeispiels einer Haltevorrichtung 34 des Montagesystems 12. Die Haltevorrichtung 34, die auch als Kran oder Galgen bezeichnet werden kann, dient zum Halten der teilweise oder vollständig montierten Gasturbine 10 und/oder eines Kernmoduls 36 (s. Fig. 17) der Gasturbine 10 und umfasst als Positionierungsmittel einen um etwa ±10° um die y-Achse bzw. Hochachse verschwenkbaren Querbalken 38, an dessen Enden jeweils ein hydraulischer Zylinder 40 zur Höheneinstellung (z. B. bis zu 42 mm) angeordnet ist. Die Betätigung erfolgt beispielsweise mit einer auf der Rückseite der Haltevorrichtung 34 angeordneten hydraulischen Pumpe (nicht gezeigt), die handbetätigbar sein kann. An beiden Zylindern 40 ist jeweils ein als weiteres Positionierungsmittel dienendes Gelenklager 42 mit einem Halteelement 43 angeordnet, von denen exemplarisch eines in Fig. 5 in Schnittansicht vergrößert dargestellt ist. Jedes Gelenklager 42 erlaubt eine Pendelbewegung von etwa ±6° zum Toleranzausgleich. Weiterhin sind Indikatorstifte 41 vorgesehen, die nach oben gedrückt werden, wenn das Halteelement 43 zu weit nach oben bewegt wird. Hierdurch wird ein Arbeiter 50 darauf aufmerksam gemacht, dass die Gasturbine 10 nicht weiter angehoben werden darf. Zum Verschwenken des Querbalkens 38 dient ein Handrad 44. Mit Hilfe von Markierungen 46 kann die Lage des Querbalkens 38 präzise eingestellt werden. Die Haltevorrichtung 34 umfasst als grundsätzlich optionales Bauteil weiterhin eine manuell betätigbare Gabel 48, mit der die Haltevorrichtung 34 durch einen Arbeiter 50 angehoben, abgesenkt und zum Transport gezogen bzw. geschoben werden kann. Alternativ oder zusätzlich kann vorgesehen sein, dass die Haltevorrichtung 34 höhenverstellbare Füße und/oder Räder bzw. Rollen umfasst und/oder am Boden festgelegt, beispielsweise festgeschraubt ist.

Das Verbindungsmodul 18 ist durch korrespondierende Kopplungsmittel 24 lösbar mit der Haltevorrichtung 34 verbindbar. Hierzu umfasst die Haltevorrichtung 34 vorliegend als Dornen ausgebildete Positionierungsmittel 32, die zur korrekten Ausrichtung der als Markierungen ausgebildeten Positionierungsmittel 32 des Verbindungsmoduls 18 dienen. Die Kopplungsmittel 24 sind im gezeigten Ausführungsbeispiel als Sperrriegel ausgebildet und klemmen die Mittelstrebe 22 des Verbindungsmoduls 18 fest, wobei das Verbindungsmodul 18 im festgeklemmten Zustand nach oben hin frei ist.

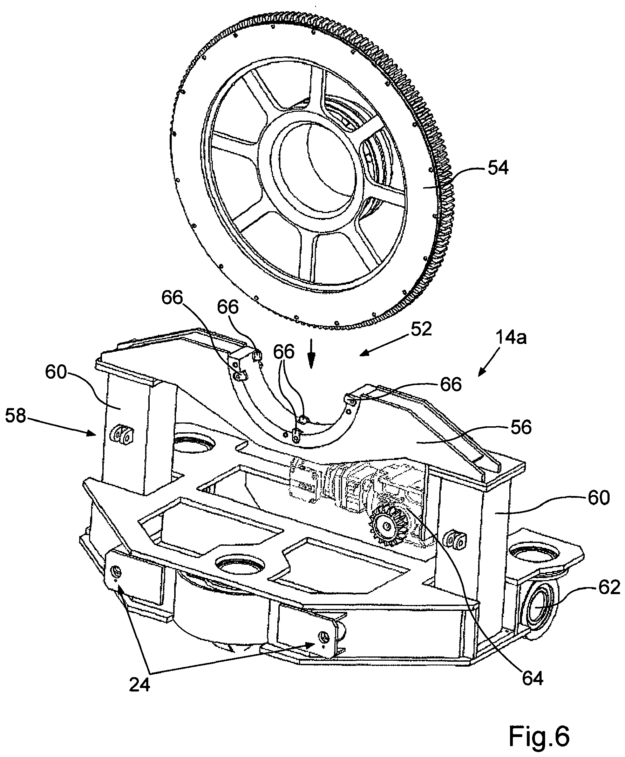

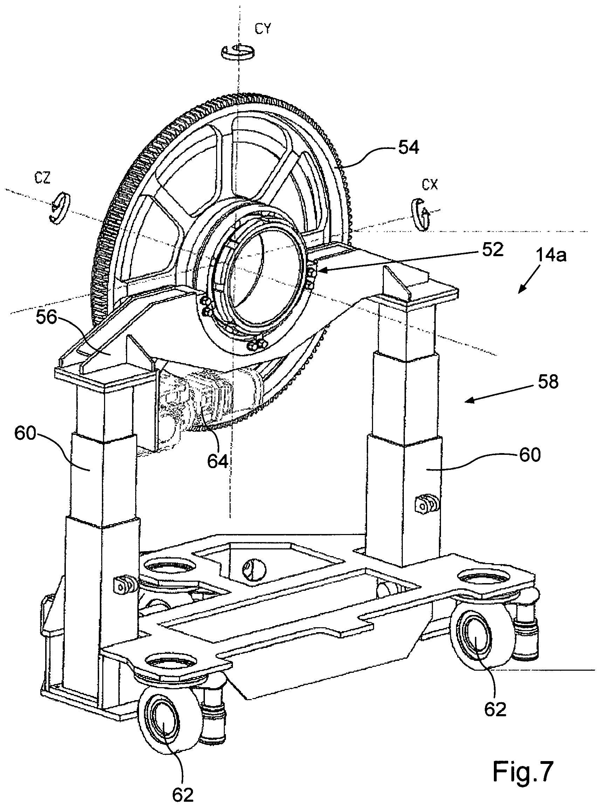

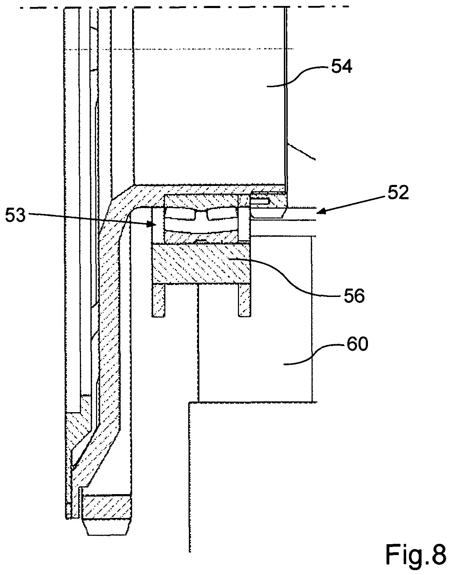

Fig. 6 zeigt eine vordere Perspektivansicht eines Ausführungsbeispiels eines ersten Führungswagens 14a zum Halten des ersten Triebwerkbauteils 16a, beispielsweise einer sogenannten Low Pressure Turbine (LPT). Fig. 6 wird im Folgenden in Zusammenschau mit Fig. 7 und Fig. 8 erläutert werden, wobei Fig. 7 eine hintere Perspektivansicht des ersten Führungswagens 14a und Fig. 8 eine schematische Schnittansicht einer als Pendelrollenlager ausgebildeten Ringhalterung 52 des ersten Führungswagens 14a zeigen. Aus Gründen der Übersichtlichkeit ist in Fig. 6 bis Fig. 8 nur ein Montagering 54 des ersten Triebwerkbauteils 16a dargestellt. Weiterhin ist in Fig. 8 ein Pendelrollenlager 53 erkennbar, welches ein Pendeln des Montagerings 54 um die x-, y- und z-Achse ermöglicht. Grundsätzlich kann der erste Führungswagen 14a aber natürlich auch derart ausgebildet sein, dass das erste Triebwerkbauteil 16a auch ohne Montagering 54 an diesem festlegbar ist. Man erkennt in Fig. 6 die bereits im Zusammenhang mit dem Verbindungsmodul 18 erwähnten korrespondierenden Kopplungsmittel 24, um den Führungswagen 14a mit dem Verbindungsmodul 18 zu koppeln. Weiterhin umfasst der Führungswagen 14a besagte Ringhalterung 52 zum lösbaren Fixieren des Montagerings 54 und damit des ersten Triebwerkbauteils 16a. Die Ringhalterung 52 ist an einer Querstrebe 56 angeordnet. Die Querstrebe 56 kann mittels einer Hebeeinrichtung 58 in y-Richtung angehoben und abgesenkt werden. Die Hebeeinrichtung 58 umfasst hierzu zwei teleskopartig aus- und einfahrbare Hebesäulen 60, die in Fig. 6 im eingezogenen und in Fig. 7 im maximal ausgefahrenen Zustand gezeigt sind. Die Hebesäulen 60 sind dabei synchronisiert, um Verwindungen und dergleichen beim Anheben und Absenken zuverlässig auszuschließen. Weiterhin umfasst der erste Führungswagen 14a eine steuer- und/oder regelbare Antriebseinrichtung (nicht gezeigt) zum motorunterstützten Bewegen. Die Antriebseinrichtung wirkt auf wenigstens eines von drei Rädern 62, die in Anzahl und Anordnung lediglich beispielhaft gezeigt sind. Hierdurch kann der erste Führungswagen 14a ferngesteuert und/oder autonom bewegt werden. Zum Drehen des ersten Triebwerkbauteils 16a relativ zum ersten Führungswagen 14a um die z-Achse umfasst dieser einen Motor als Antriebsmittel 64. Die als Pendelrollenlager 53 ausgebildeten Ringhalterung 52 umfasst Klammern 66 zum lösbaren Fixieren des Montagerings 54. Der Montagering 54 kann damit nicht translatorisch gegenüber dem ersten Führungswagen 14a bewegt, aber in geringem Umfang (±0,5° bis ±5,0°) um die x-, y- und z-Achse verschwenkt werden. Alternativ oder zusätzlich kann die Ringhalterung 52 in z-Richtung beweglich und arretierbar ausgebildet sein.

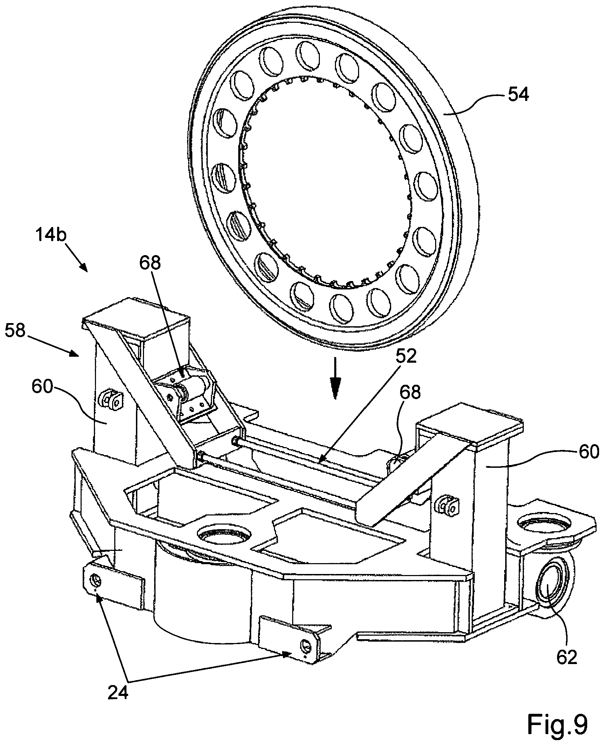

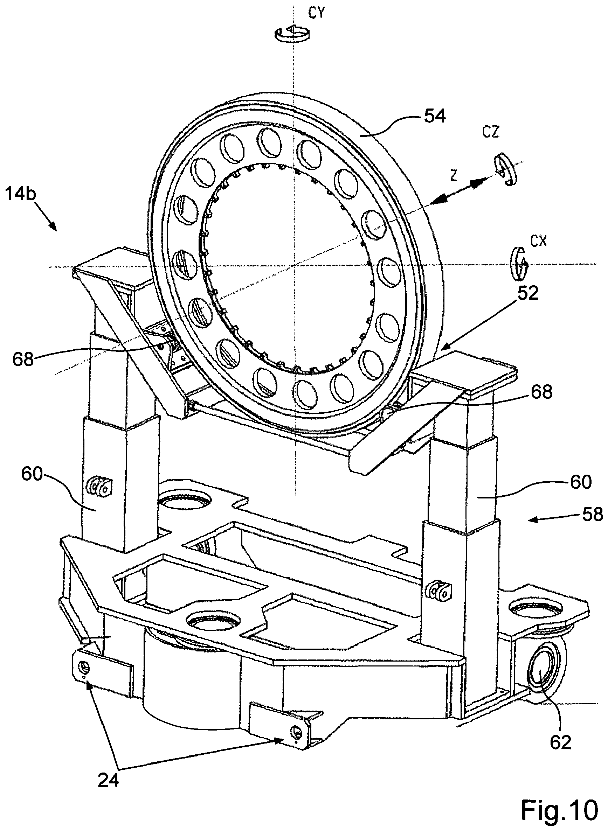

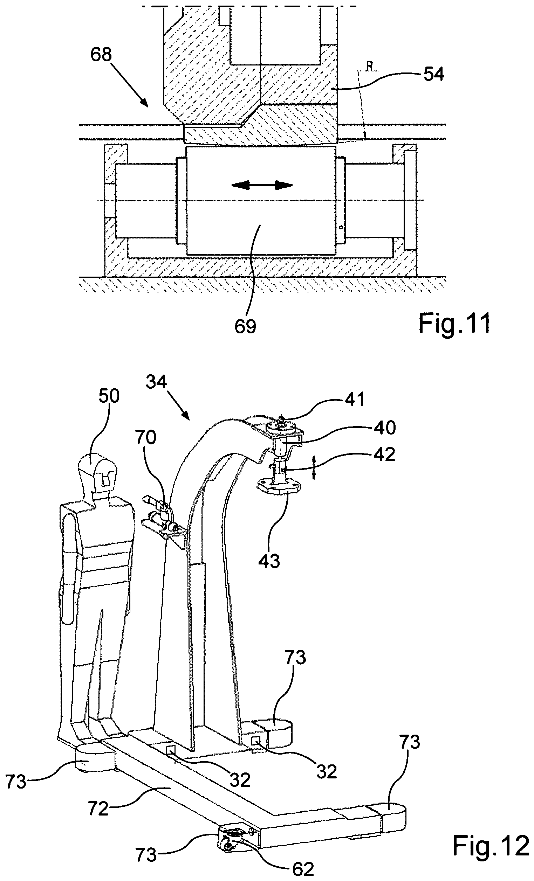

Fig. 9 zeigt eine vordere Perspektivansicht eines Ausführungsbeispiels eines zweiten Führungswagens 14b zum Halten eines zweiten Triebwerkbauteils 16b, beispielsweise eines sogenannten Fan Drive Compressors (FDC). Auch hier ist aus Gründen der Übersichtlichkeit lediglich ein Montagering 54 des zweiten Triebwerkbauteils 16b dargestellt. Fig. 9 wird im Folgenden in Zusammenschau mit Fig. 10 und Fig. 11 erläutert werden, wobei Fig. 10 eine weitere vordere Perspektivansicht des zweiten Führungswagens 14b zeigt, während Fig. 11 eine schematische Schnittansicht eines Lagers 68 des zweiten Führungswagens 14b zur Anordnung eines Montageringtyps des zweiten Triebwerkbauteils 16b zeigen. Man erkennt in Fig. 11, dass der Montagering 54 ballig ausgebildet ist, während eine zugeordnete Laufrolle 69 des Lagers 68 zylindrisch ist.

Der grundsätzliche Aufbau des zweiten Führungswagens 14b entspricht in weiten Teilen dem Aufbau des ersten Führungswagens 14a. Im Unterschied zum ersten Führungswagen 14a ist der zweite Führungswagen 14b hinsichtlich seiner Dimensionen an größere Triebwerkbauteile wie Verdichter-Module angepasst. Insbesondere die Ringhalterung 52 ist daher unterschiedlich ausgebildet und umfasst seitliche Lager 68, die an den jeweiligen Montageringtyp angepasst sein können.

Beispielsweise können die Lagerflächen des Lagers 68 ballig ausgebildet sein, wodurch eine Rotationsbewegung in x, y, z-Richtung ermöglicht ist. Der Translationsfreiheitsgrad in x-Richtung ist demgegenüber eingeschränkt. Durch Drehung um die y-Achse wird der Montagering 54 zudem geklemmt. Alternativ können die Lagerflächen des Lagers 68 zylindrisch, das heißt als Laufrolle 59 ausgebildet sein, wodurch Rotationsbewegungen um die x-, y- und z-Achse sowie Translationsbewegungen in z-Richtung erlaubt bzw. möglich sind.

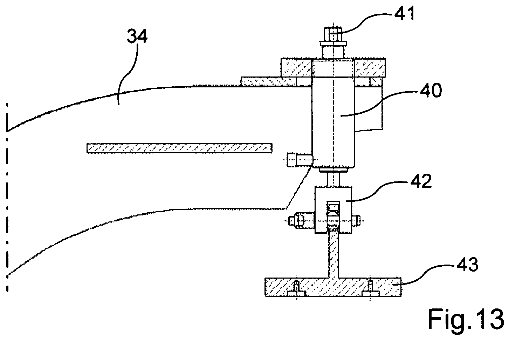

Fig. 12 zeigt eine Perspektivdarstellung eines zweiten Ausführungsbeispiels der Haltevorrichtung 34. Im Unterschied zum ersten Ausführungsbeispiel umfasst die Haltevorrichtung 34 keinen Querbalken 38, sondern lediglich einen hydraulischen Zylinder 40, über welchen ein Gelenklager 42 mit einem anschließendem Halteelement 43 zur Anbindung eines Bauteils in y-Richtung bewegbar ist (z. B. um bis zu 76 mm). Der Zylinder 40 ist über eine hydraulische Handpumpe 70 betätigbar. Fig. 13 zeigt zur weiteren Verdeutlichung eine schematische und ausschnittsweise Schnittansicht des oberen Bereichs der Haltevorrichtung 34. Ein weiterer Unterschied zum ersten Ausführungsbeispiel besteht darin, dass die Haltevorrichtung 34 ein im Wesentlichen U-förmiges Bodenelement 72 aufweist, welches über vier Rollen oder Räder 62 bewegbar ist. Die Räder 62 können durch Schutzkappen 73 überdeckt sein und können hydraulisch abgesenkt werden, um die Haltevorrichtung 34 in einer eingestellten Position am Boden zu fixieren. Weiterhin umfasst die Haltevorrichtung 34 Positionierungsmittel 32, um eine korrekte Ausrichtung zum Verbindungsmodul 18 sicherzustellen.

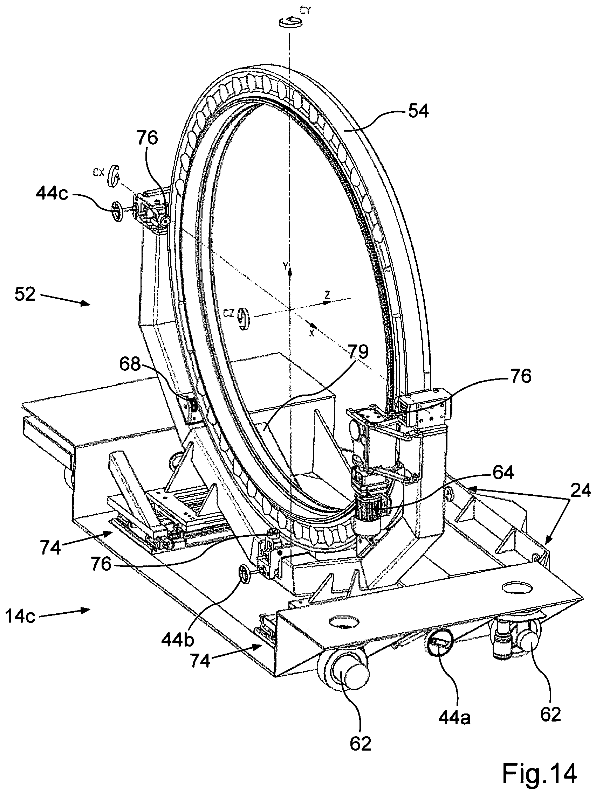

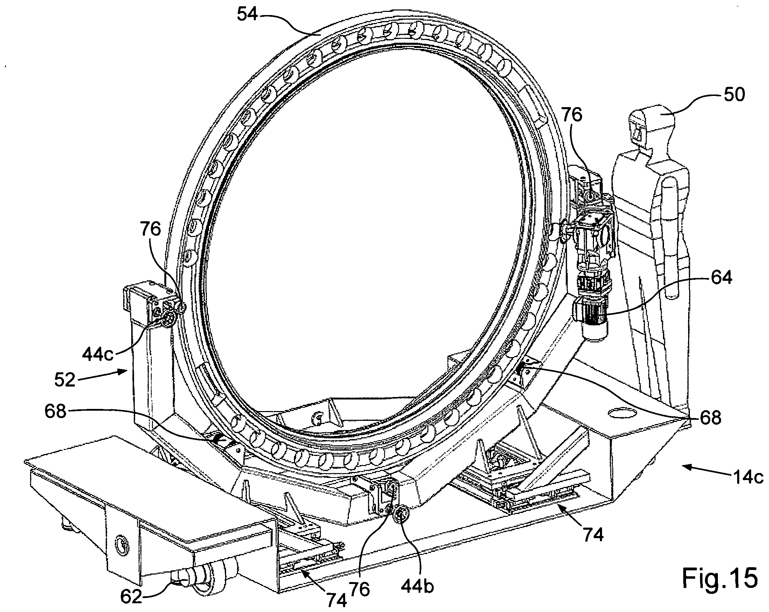

Fig. 14 zeigt eine hintere Perspektivansicht eines Ausführungsbeispiels eines dritten Führungswagens 14c zum Halten eines dritten Triebwerkbauteils 16c, bei welchem es sich im gezeigten Ausführungsbeispiel um ein Fan-Modul handelt, von dem aus Gründen der Übersichtlichkeit lediglich ein Montagering 54 abgebildet ist. Fig. 15 zeigt eine weitere hintere Perspektivansicht des dritten Führungswagens 14c aus einem anderen Blickwinkel. Auch der dritte Führungswagen 14c verfügt über korrespondierende Kopplungsmittel 24 zum lösbaren Koppeln mit dem Verbindungsmodul 18. Weiterhin umfasst der Führungswagen 14c vier Räder 62, die über eine steuer- und/oder regelbare Antriebseinrichtung (nicht gezeigt) antreibbar sind, so dass auch der Führungswagen 14c motorunterstützt, ferngesteuert und/oder autonom bewegbar ist. Dabei kann es grundsätzlich vorgesehen sein, dass jeweils zwei Räder 62 über eine Wippe um die x-Achse verschwenkbar gelagert sind, wodurch auf konstruktiv einfache Weise sichergestellt ist, dass die Räder auch bei unebenem Boden stets Bodenkontakt besitzen. Auch der dritte Führungswagen 14c ist an einen Umfang und ein Gewicht der zu transportierenden und zu montierenden Triebwerksbauteile 16c angepasst und dementsprechend größer ausgebildet als beispielsweise der erste Führungswagen 14a. Man erkennt, dass die Ringhalterung 52 im Unterschied zu den vorstehend beschriebenen Führungswagen 14a, 14b auf Führungsschlitten 74 angeordnet ist, durch welchen das dritte Triebwerkbauteil 16c relativ zum Führungswagen 14c translatorisch in x- und z-Richtung bewegbar ist. Die Einstellung der relativen x-Position der Ringhalterung 52 erfolgt über das Handrad 44a. Die Einstellung der relativen z-Position erfolgt durch Verschieben des Führungsschlittens 74 in z-Richtung, wobei im gezeigten Ausführungsbeispiel Magnetbremsen zum bedarfsweisen Festlegen der relativen z-Position des Führungsschlittens 74 zum Führungswagen 14c vorgesehen sind. Weiterhin umfasst der dritte Führungswagen 14c zwei weitere Handräder 44b, 44c als Positionierungsmittel, durch die die Ringhalterung 52 rotatorisch um die x-Achse bzw. um die y-Achse gedreht werden kann. Die Ringhalterung 52 weist insgesamt drei Paare Halterollen 76 auf, mit denen der Montagering 54 gehalten wird. Weiterhin umfasst der dritte Führungswagen 14c einen Motor als Antriebsmittel 64 zum Drehen des dritten Triebwerkbauteils 16c relativ zum dritten Führungswagen 14c. Der Motor 64 ist verschwenkbar und kann dadurch nach dem Fixieren des Montagering 54 mit diesem in Eingriff bzw. in Kontakt gebracht werden, um ihn um die z-Achse zu drehen. Zum Entfernen des Montagerings 54 aus der Ringhalterung 52 können der Motor 64 und die Halterollen 76 dann wieder in die in Fig. 15 gezeigte Stellung herausgeschwenkt werden.

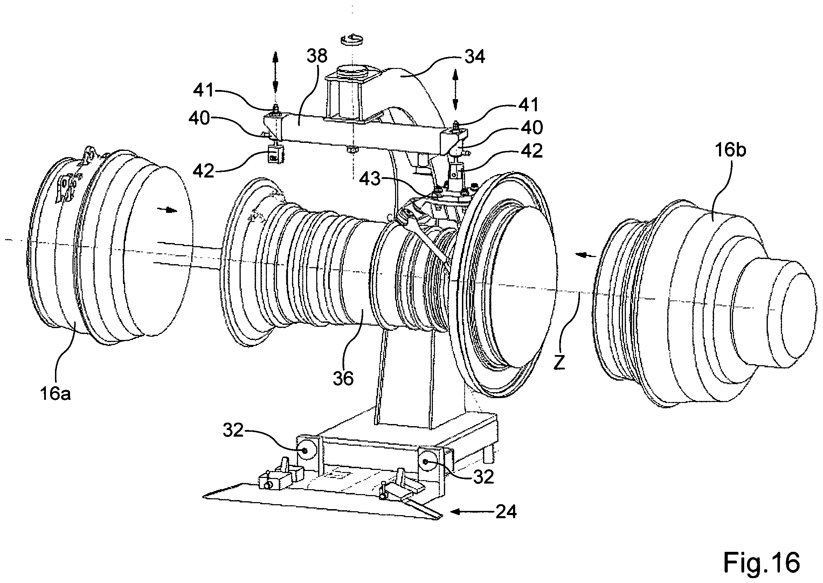

In den folgenden Figuren wird eine Montage einer Gasturbine 10 für ein Flugtriebwerk mit Hilfe des Montagesystems 12 exemplarisch beschrieben werden. Fig. 16 zeigt hierzu eine Perspektivansicht eines mittels der in Fig. 4 gezeigten Haltevorrichtung 34 gehaltenen Kernmoduls 36 der Gasturbine 10, an welches ein erstes und ein zweites Triebwerkbauteil 16a, 16b montiert werden. Hierzu werden die Triebwerkbauteile 16a, 16b in z-Richtung an das Kernmodul 36 bewegt und an diesem befestigt. Das Kernmodul 36 ist dabei nur an einem Halteelement 43 befestigt, kann aber grundsätzlich an beiden Enden des Querbalkens 38 befestigt werden. Dieser erste Montageschritt kann grundsätzlich ohne die Verwendung der Führungswagen 14a, 14b und des Verbindungsmoduls 18 durchgeführt werden. Alternativ kann bereits die Anordnung mindestens eines der Triebwerkbauteile 16a, 16b am Kernmodul 36 mit Hilfe der Führungswagen 14a, 14b durchgeführt werden.

In einem zweiten Schritt werden das Verbindungsmodul 18 an die Haltevorrichtung 34 und die Führungswagen 14a, 14b an das Verbindungsmodul 18 gekoppelt. Fig. 17 zeigt hierzu eine Perspektivansicht der teilweise montierten und zu diesem Zeitpunkt aus den Triebwerkbauteilen 16a, 16b und dem Kernmodul 36 bestehenden Gasturbine 10. Man erkennt, dass das Verbindungsmodul 18 bereits an die Haltevorrichtung 34 gekoppelt ist. Die Hebeeinrichtungen 58 der Führungswagen 14a, 14b sind in der abgesenkten Stellung, während die Führungswagen 14a, 14b an das Verbindungsmodul 18 bewegt und mit diesem über die Kopplungsmittel 24 gekoppelt werden. An die Triebwerkbauteile 16a, 16b wurden bereits entsprechende Montageringe 54 montiert.

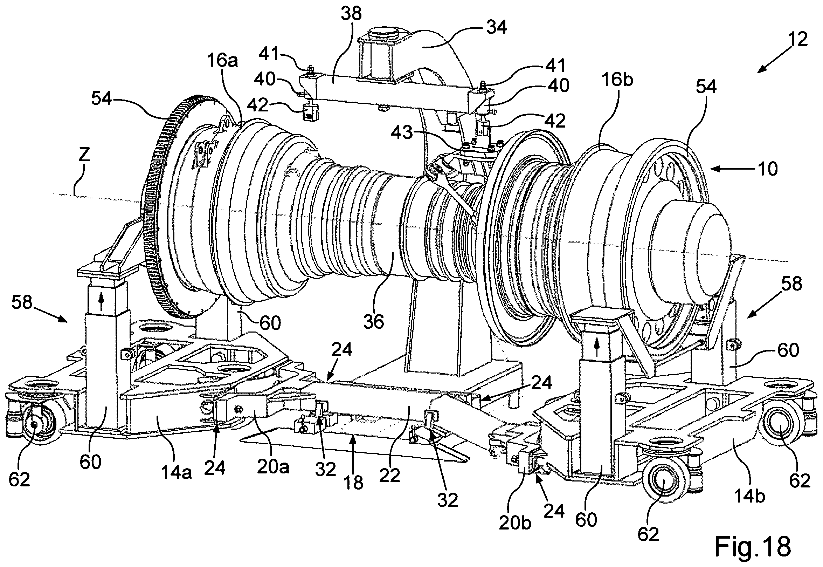

Anschließend werden die Hebesäulen 60 der Führungswagen 14a, 14b in y-Richtung angehoben, bis die Montageringe 54 in ihren jeweiligen Ringhalterungen 52 liegen und in diesen lagegesichert werden können. Sobald die Gasturbine 10 ihre maximal zulässige Höhe erreicht hat, werden die Indikatorstifte 41 der Haltevorrichtung 34 nach oben gedrückt und informieren einen Arbeiter, dass keine weitere Anhebung zulässig ist. Fig. 18 zeigt hierzu eine Perspektivansicht der teilweise montierten Gasturbine 10, bei welcher die Montageringe 54 des ersten und zweiten Triebwerkbauteils 16a, 16b montiert und durch den ersten bzw. zweiten Führungswagen 14a, 14b gehalten sind. Man erkennt, dass die Länge des Verbindungsmoduls 18 derart gewählt ist, dass die Ringhalterungen 52 der gekoppelten Führungswagen 14a, 14b bereits zumindest im Wesentlichen korrekt voneinander beabstandet sind, um die Montageringe 54 aufzunehmen.

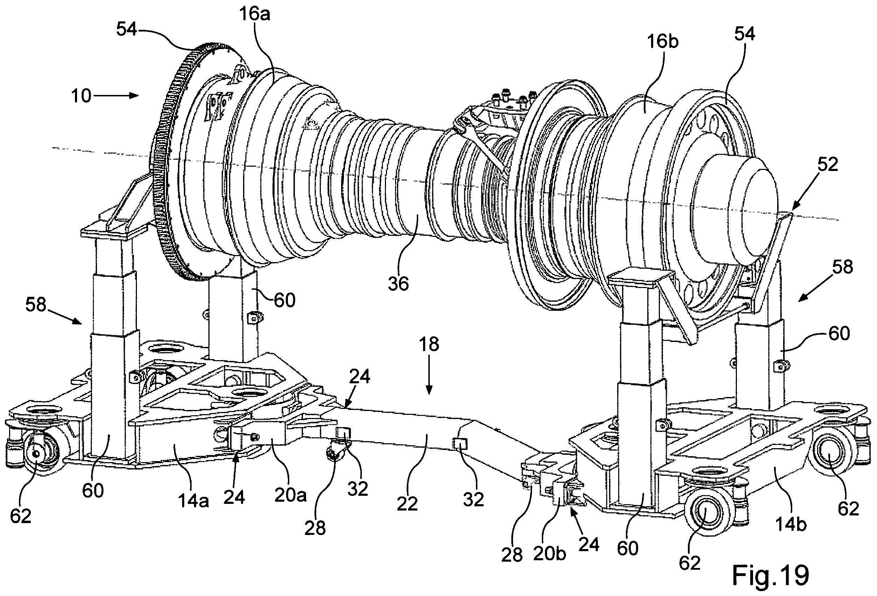

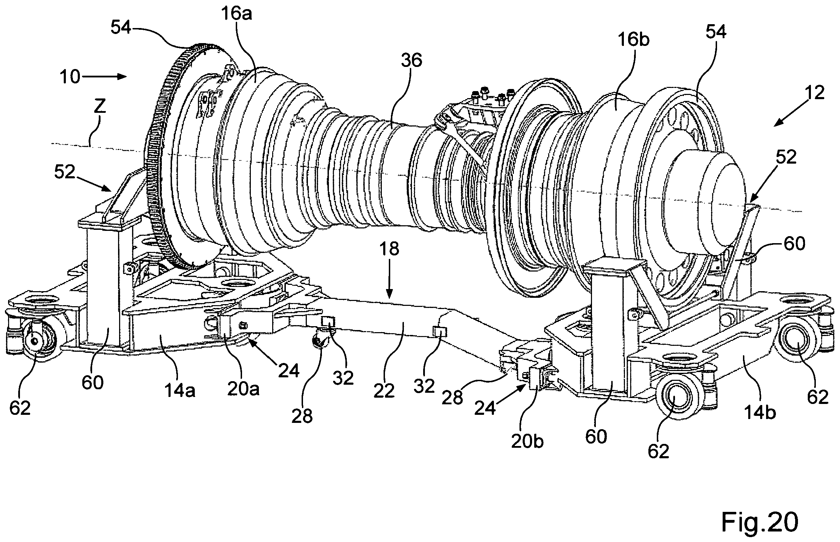

Sobald die Montageringe 54 in ihren zugeordneten Ringhalterungen 52 befestigt sind, kann die Haltevorrichtung 34 entfernt bzw. das Verbindungsmodul 18 von dieser abgekoppelt werden. Fig. 19 zeigt hierzu eine Perspektivansicht der teilweise montierten Gasturbine 10, wobei die Haltevorrichtung 34 entfernt und die teilweise montierte Gasturbine 10 mit Hilfe der jeweiligen Hebeeinrichtungen 58 des ersten und zweiten Führungswagens 14a, 14b maximal angehoben ist. Fig. 20 zeigt eine Perspektivansicht der teilweise montierten Gasturbine 10, wobei die teilweise montierte Gasturbine 10 mit Hilfe der Hebeeinrichtungen 58 des ersten und zweiten Führungswagens 14a, 14b vollständig abgesenkt ist. Dies erlaubt eine Einstellung des Abstands der Turbinenachse (z-Achse) bzw. der Gasturbine 10 vom Boden, wobei beispielsweise ein Einstellbereich zwischen 1000 mm und 1500 mm vorgesehen sein kann. Zusätzlich kann die teilweise montierte Gasturbine 10 durch die Antriebsmittel 64 des ersten Führungswagens 14a um 360° um die z-Achse gedreht werden, so dass der gesamte Außenumfang der Gasturbine 10 für Montagearbeiten zugänglich ist. Hierdurch können die Montagearbeiten schnell, einfach und ergonomisch für den betreffenden Arbeiter 50 durchgeführt werden. Zusätzlich kann die Gasturbine 10 mit Hilfe des Montagesystems 12 auch wie vorstehend beschrieben transportiert werden. Mit Hilfe der Synchronisierungsmittel 30 werden die beiden gekoppelten Führungswagen 14a, 14b dabei wie ein einzelnes Fahrzeug bewegt, so dass keine Verspannungen auftreten.

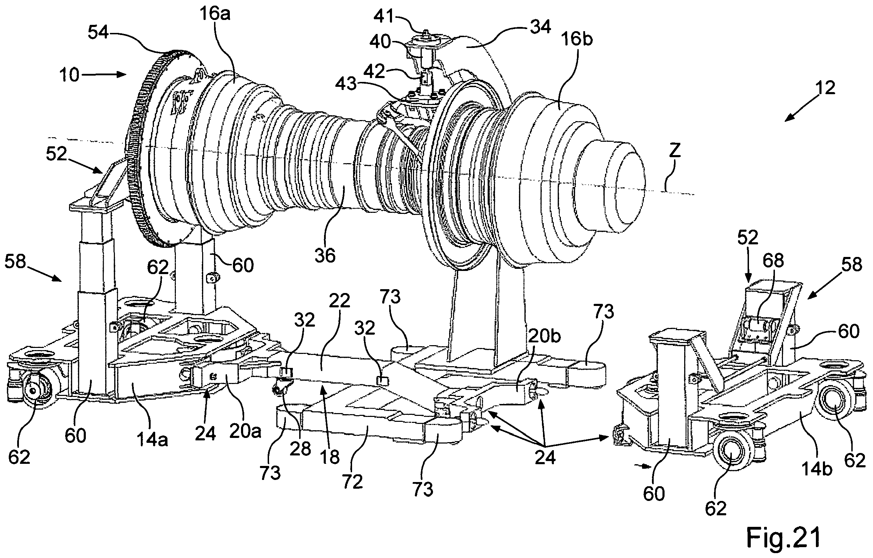

Fig. 21 zeigt eine Perspektivansicht der teilweise montierten Gasturbine 10, wobei die Haltevorrichtung 34 gemäß dem zweiten Ausführungsbeispiel am Kernmodul 36 befestigt und der zweite Führungswagen 14b vom Verbindungsmodul 18 abgekoppelt ist. Hierzu wird die Gasturbine 10 mittels der Hebeeinrichtungen 58 zumindest annähernd in die obere Stellung bewegt. Anschließend wird das U-fömige Bodenelement 72 der Haltevorrichtung 34 im Bogen unter dem Verbindungsmodul 18 hindurch bewegt und in der gezeigten Stellung durch Wegklappen der Rollen 62 auf dem Boden abgesetzt. Anschließend wird das Kernmodul 36 am Halteelement 43 der Haltevorrichtung 34 befestigt und die Gasturbine 10 durch den Zylinder 40 zumindest so weit angehoben, dass der zweite Führungswagen 14b, bei welchem die Hebeeinrichtung 58 in die nicht-ausgefahrene bzw. niedrigste Stellung bewegt wurde, entfernt werden kann. Weiterhin wird der Montagering 54 wieder vom zweiten Triebwerkbauteil 16b entfernt.

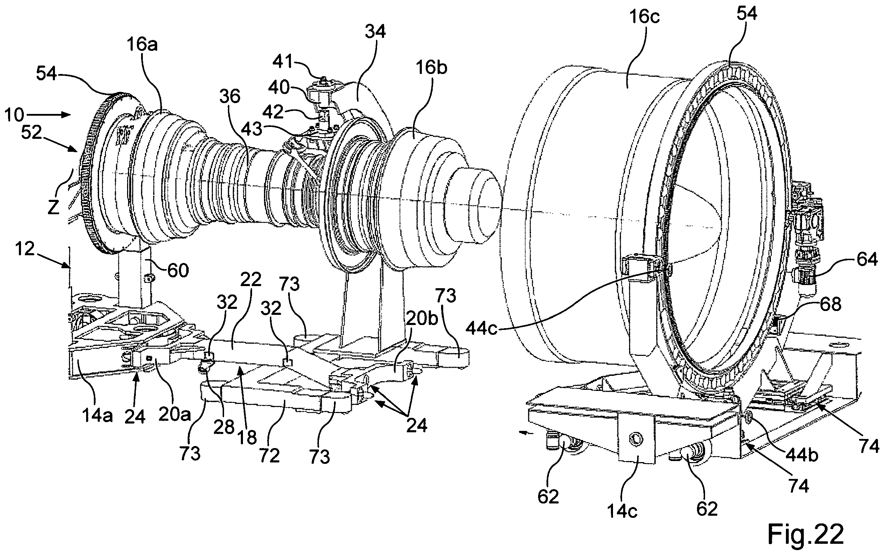

Fig. 22 zeigt eine Perspektivansicht der teilweise montierten Gasturbine 10, wobei ein drittes Triebwerkbauteil 16c mittels eines dritten Führungswagens 14c angeliefert wird. Bei dem dritten Triebwerkbauteil 16c handelt es sich um ein bereits vormontiertes Fan-Modul, das in der vorstehend beschriebenen Weise korrekt zur z- bzw. Turbinenachse der teilmontierten Gasturbine 10 ausgerichtet wird. Hierbei wird das dritte Triebwerkbauteil 16c zunächst in z-Richtung mit Hilfe des Führungsschlittens 74 maximal nach vorne, das heißt von der Gasturbine 10 weg bewegt und mit Hilfe der Handräder 44a-c ausgerichtet. Die korrekte Höhe der Gasturbine 10 wird durch die Haltevorrichtung 34 und die Hebeeinrichtung 58 des ersten Führungswagens 14a eingestellt.

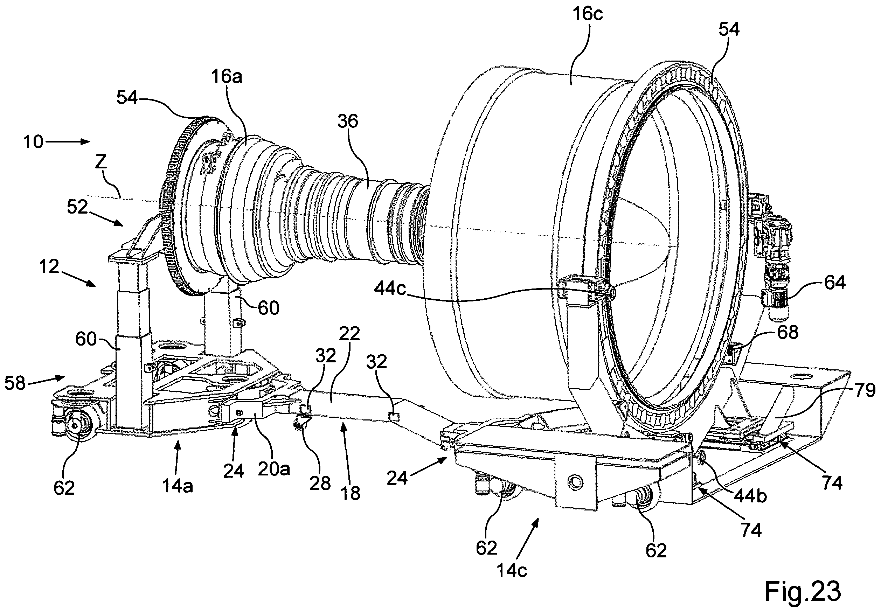

Fig. 23 zeigt eine Perspektivansicht der montierten Gasturbine 10, wobei die Haltevorrichtung 34 entfernt und das dritte Triebwerkbauteil 16c montiert ist. Hierzu wird das dritte Triebwerkbauteil 16c nach seiner korrekten Ausrichtung entlang der z-Achse der Gasturbine 10 mit Hilfe des Führungsschlittens 74 langsam in Richtung der Gasturbine 10 bewegt und, sobald die korrekte Montageposition erreicht ist, mit der Gasturbine 10 bzw. dem zweiten Triebwerkbauteil 16b verbunden. Anschließend werden die Halterollen 76 entfernt und der Motor 64 nach außen weggeschwenkt, um den Montagering 54 des dritten Triebwerkbauteils 16c freizugeben. Mit Hilfe des Antriebsmittels 64 des ersten Führungswagens 14a kann die Gasturbine 10 nunmehr um 360° gedreht werden, um die erforderlichen Abschlussarbeiten durchzuführen. Ebenso ist auch hier ein Transport der Gasturbine 10 mit Hilfe des Montagesystems 12 möglich. Eine Demontage der Gasturbine 10 kann in entsprechend umgekehrter Weise durchgeführt werden.

Die Führungswagen 14a-c weisen somit Triebwerksaufnahmen bzw. Halterahmen 52 auf, die so ausgeführt bzw. gelagert sind, dass ein Pendeln der Gasturbine 10 um die x-, y- und z-Achse ermöglicht ist oder werden kann. Am Führungswagen 14c ist zudem ein translatorischer Freiheitsgrad entlang der z-Achse vorhanden. Dies ermöglicht das spannungsfreie Transportieren, Montieren, Demontieren und Warten von Gasturbinen 10 mit flexiblen Montageeinheiten.

### Bezugszeichenliste:

- 10: Gasturbine
- 12: Montagesystem
- 14: Führungswagen
- 16: Triebwerkbauteilen
- 18: Verbindungsmodul
- 20: Querstrebe
- 22: Mittelstrebe
- 24: Kopplungsmittel
- 26: Dämpfungseinrichtungen
- 28: Rolle
- 30: Synchronisierungsmittel
- 32: Positionierungsmittel
- 34: Haltevorrichtung
- 36: Kernmodul
- 38: Querbalken
- 40: Zylinder
- 41: Indikatorstift
- 42: Gelenklager
- 43: Halteelement
- 44: Handrad
- 46: Markierungen
- 48: Gabel
- 50: Arbeiter
- 52: Ringhalterung
- 53: Pendelrollenlager
- 54: Montagering
- 56: Querstrebe
- 58: Hebeeinrichtung
- 60: Hebesäulen
- 62: Rad
- 64: Antriebsmittel
- 66: Klammern
- 68: Lager
- 69: Laufrolle
- 70: Handpumpe
- 72: Bodenelement
- 73: Schutzkappen
- 74: Führungsschlitten
- 76: Halterollen

## Patentansprüche

1. Montagesystem (12) zum Montieren, Demontieren und/oder Warten einer Gasturbine (10), umfassend:
- einen ersten Führungswagen (14a) zum Halten eines ersten Triebwerkbauteils (16a), insbesondere eines Turbinenmoduls der Gasturbine (10);
- einen zweiten Führungswagen (14b) zum Halten eines zweiten Triebwerkbauteils (16b), insbesondere eines Verdichtermoduls der Gasturbine (10); und
- ein Verbindungsmodul (18), welches durch korrespondierende Kopplungsmittel (24) lösbar mit dem ersten und dem zweiten Führungswagen (14a, 14b) verbindbar ist,
**dadurch gekennzeichnet, dass**
wenigstens einer der Führungswagen (14a-c) eine Triebwerkaufnahme umfasst, mittels welcher das zugeordnete Triebwerkbauteil (16a-c) außerhalb seines Massenmittelpunktes um drei Achsen (x, y, z) drehbar lagerbar ist, und dass wenigstens einer der Führungswagen (14b, c) eine Triebwerkaufnahme umfasst, mittels welcher das zugeordnete Triebwerkbauteil (16b, c) translatorisch entlang wenigstens einer Achse (z) bewegbar ist.

2. Montagesystem (12) nach Anspruch 1,
**dadurch gekennzeichnet, dass**
dieses wenigstens eine Haltevorrichtung (34) zum lösbaren Halten zumindest eines Kernmoduls (36) der Gasturbine (10) umfasst.

3. Montagesystem (12) nach Anspruch 2,
**dadurch gekennzeichnet, dass**
wenigstens eine Haltevorrichtung (34) zum Anheben und Absenken des Kernmoduls (36) relativ zur Haltevorrichtung (34) ausgebildet ist und/oder Positionierungsmittel (32) zum Einstellen einer räumlichen Orientierung des Kernmoduls (36) relativ zur Haltevorrichtung (34) umfasst und/oder dass die Haltevorrichtung (34) verfahrbar ausgebildet ist.

4. Montagesystem (12) nach Anspruch 2 oder 3,
**dadurch gekennzeichnet, dass**
das Verbindungsmodul (18) und die Haltevorrichtung (34) über korrespondierende Kopplungsmittel (24) lösbar miteinander verbindbar sind.

5. Montagesystem (12) nach einem der Ansprüche 1 bis 4,
**dadurch gekennzeichnet, dass**
der erste Führungswagen (14a) und/oder der zweite Führungswagen (14b) eine Ringhalterung (52) zum lösbaren Fixieren eines Montagerings (54) des ersten bzw. zweiten Triebwerkbauteils (16a, 16b) und/oder eine Hebeeinrichtung (58) zum Anheben und Absenken des ersten bzw. zweiten Triebwerkbauteils (16a, 16b) relativ zum ersten bzw. zweiten Führungswagen (14a, 14b) und/oder Antriebsmittel (64) zum Drehen des ersten bzw. zweiten Triebwerkbauteils (16a, 16b) relativ zum ersten bzw. zweiten Führungswagen (14a, 14b) und/oder Positionierungsmittel (32) zum Einstellen einer räumlichen Orientierung des ersten bzw. zweiten Triebwerkbauteils (16a, 16b) relativ zum ersten bzw. zweiten Führungswagen (14a, 14b) umfasst.

6. Montagesystem (12) nach Anspruch 5,
**dadurch gekennzeichnet, dass**
Synchronisierungsmittel (30) vorgesehen sind, mittels welchen die Hebeeinrichtungen (58) des ersten und des zweite Führungswagens (14a, 14b), wenn sie über das Verbindungsmodul (18) miteinander verbunden sind, synchron bewegbar sind.

7. Montagesystem (12) nach einem der Ansprüche 1 bis 6,
**dadurch gekennzeichnet, dass**
dieses einen dritten Führungswagen (14c) zum Halten eines dritten Triebwerkbauteils (16c), insbesondere eines Fan-Moduls der Gasturbine (10) umfasst, wobei der dritte Führungswagen (14c) durch korrespondierende Haltemittel (24) lösbar mit dem Verbindungsmodul (18) verbindbar ist.

8. Montagesystem (12) nach Anspruch 7,
**dadurch gekennzeichnet, dass**
der dritte Führungswagen (14c) verstellbare und/oder motorisch antreibbare Räder (62) und/oder eine Ringhalterung (52) zum lösbaren Fixieren eines Montagerings (54) des dritten Triebwerkbauteils (16c) und/oder eine Hebeeinrichtung (58) zum Anheben und Absenken des dritten Triebwerkbauteils (16c) relativ zum dritten Führungswagen (14c) und/oder Antriebsmittel (64) zum Drehen des dritten Triebwerkbauteils (16c) relativ zum dritten Führungswagen (14c) und/oder Positionierungsmittel (32) zum Einstellen einer räumlichen Orientierung des dritten Triebwerkbauteils (16c) relativ zum dritten Führungswagen (14c) umfasst.

9. Montagesystem (12) nach einem der Ansprüche 1 bis 8,
**dadurch gekennzeichnet, dass**
das Verbindungsmodul (18) und wenigstens einer der Führungswagen (14a-c) im verbundenen Zustand mittels einer Dämpfungseinrichtung und/oder mittels einer Gelenkeinrichtung nur innerhalb eines vorgegebenen Winkelbereichs relativ zueinander verschwenkbar sind.

10. Montagesystem (12) nach einem der Ansprüche 1 bis 9,
**dadurch gekennzeichnet, dass**
das Verbindungsmodul (18) wenigstens eine Rolle (28) umfasst, die Bodenkontakt besitzt, wenn das Verbindungsmodul (18) mit weniger als zwei der Führungswagen (14a-c) verbunden ist, und/oder die keinen Bodenkontakt besitzt, wenn das Verbindungsmodul (18) mit mindestens zwei der Führungswagen (14a-c) verbunden ist.

11. Montagesystem (12) nach einem der Ansprüche 1 bis 10,
**dadurch gekennzeichnet, dass**
wenigstens einer der Führungswagen (14a-c) eine Steuer- und/oder regelbare Antriebseinrichtung zum motorunterstützten Bewegen umfasst.

12. Montagesystem (12) nach Anspruch 11,
**dadurch gekennzeichnet, dass**
Synchronisierungsmittel (30) vorgesehen sind, mittels welchen die Antriebseinrichtungen von wenigstens zwei Führungswagen (14a-c) derart ansteuerbar sind, dass die Führungswagen (14a-c), wenn sie über das Verbindungsmodul (18) miteinander verbunden sind, synchron bewegbar sind.

13. Verfahren zum zumindest teilweisen Montieren einer Gasturbine (10), umfassend die Schritte:
- Bereitstellen eines ersten Triebwerkbauteils (16a), insbesondere eines Turbinenmoduls der Gasturbine (10), eines zweiten Triebwerkbauteils (16b), insbesondere eines Verdichtermoduls der Gasturbine (10), und eines Kernmoduls (36) der Gasturbine (10);
- Befestigen des ersten Triebwerkbauteils (16a) an einem ersten Endbereich des Kernmoduls (36); und
- Befestigen des zweiten Triebwerkbauteils (16b) an einem zweiten Endbereich des Kernmoduls (36);
wobei
- das erste Triebwerkbauteil (16a) mittels eines ersten Führungswagens (14a) und das zweite Triebwerkbauteil (16b) mittels eines zweiten Führungswagens (14b) gehalten wird; und
- der erste Führungswagen (14a) und der zweite Führungswagen (14b) lösbar über ein Verbindungsmodul (18) miteinander gekoppelt werden,
**dadurch gekennzeichnet, dass**
wenigstens einer der Führungswagen (14a-c) eine Triebwerkaufnahme umfasst, mittels welcher das zugeordnete Triebwerkbauteil (16a-c) außerhalb seines Massenmittelpunktes um drei Achsen (x, y, z) drehbar gelagert wird, und dass wenigstens einer der Führungswagen (14b, c) eine Triebwerkaufnahme umfasst, mittels welcher das zugeordnete Triebwerkbauteil (16b, c) translatorisch entlang wenigstens einer Achse (z) bewegt wird.

14. Verfahren nach Anspruch 13,
**dadurch gekennzeichnet, dass**
- am ersten und/oder am zweiten Triebwerkbauteil (16a, 16b) ein Montagering (54) befestigt und in einer Ringhalterung (52) des ersten bzw. des zweiten Führungswagens (14a, 14b) lösbar fixiert wird; und/oder
- dass zumindest das erste und/oder zweite Triebwerkbauteil (16a, 16b) relativ zum ersten bzw. zweiten Führungswagen (14a, 14b) mittels einer Hebeeinrichtung (58) angehoben und/oder abgesenkt wird; und/oder
- dass zumindest das erste bzw. zweite Triebwerkbauteil (14a, 14b) durch Antriebsmittel (64) relativ zum ersten bzw. zweiten Führungswagen (14a, 14b) gedreht wird; und/oder
- dass eine räumlichen Orientierung zumindest des ersten bzw. zweiten Triebwerkbauteils (16a, 16b) durch Positionierungsmittel (32) relativ zum ersten bzw. zweiten Führungswagen (14a, 14b) eingestellt wird.

15. Verfahren nach Anspruch 13 oder 14,
**gekennzeichnet durch** die zusätzlichen Schritte:
- Abkoppeln des zweiten Führungswagens (14b) vom Verbindungsmodul (18) nach dem Befestigen des zweiten Triebwerkbauteils (16a) am Kernmodul (36);
- Halten eines dritten Triebwerkbauteils (16c), insbesondere ein Fan-Moduls der Gasturbine (10), mittels eines dritten Führungswagens (14c);
- lösbares Koppeln des dritten Führungswagens (14c) mit dem Verbindungsmodul (18); und
- Befestigen des dritten Triebwerkbauteils (14c) am zweiten Triebwerkbauteil (16b).

## Claims

1. Assembly system (12) for assembling, disassembling and/or maintaining a gas turbine (10), comprising:
- a first guide carriage (14a) for holding a first engine component (16a), in particular a turbine module of the gas turbine (10);
- a second guide carriage (14b) for holding a second engine component (16b), in particular a compressor module of the gas turbine (10); and
- a connection module (18) which can be detachably connected to the first and to the second guide carriage (14a, 14b) by corresponding coupling means (24),
**characterized in that**
at least one of the guide carriages (14a-c) comprises an engine mount by means of which the associated engine component (16a-c) can be rotatably mounted, outside its center of mass, about three axes (x, y, z), and **in that** at least one of the guide carriages (14b, c) comprises an engine mount by means of which the associated engine component (16b, c) can be moved translationally along at least one axis (z).

2. Assembly system (12) according to claim 1, **characterized in that** said system comprises at least one holding apparatus (34) for detachably holding at least one core module (36) of the gas turbine (10).

3. Assembly system (12) according to claim 2, **characterized in that** at least one holding apparatus (34) is designed to raise and lower the core module (36) relative to the holding apparatus (34) and/or comprises positioning means (32) for setting a spatial orientation of the core module (36) relative to the holding apparatus (34) and/or **in that** the holding apparatus (34) is designed to be movable.

4. Assembly system (12) according to either claim 2 or claim 3, **characterized in that** the connection module (18) and the holding apparatus (34) can be detachably interconnected via corresponding coupling means (24).

5. Assembly system (12) according to any of claims 1 to 4, **characterized in that** the first guide carriage (14a) and/or the second guide carriage (14b) comprises a ring holder (52) for detachably securing an assembly ring (54) of the first and/or the second engine component (16a, 16b), respectively, and/or a lifting device (58) for lifting and lowering the first and/or the second engine component (16a, 16b) relative to the first and/or the second guide carriage (14a, 14b), respectively, and/or drive means (64) for rotating the first and/or the second engine component (16a, 16b) relative to the first and/or the second guide carriage (14a, 14b), respectively, and/or positioning means (32) for setting a spatial orientation of the first and/or the second engine component (16a, 16b) relative to the first and/or the second guide carriage (14a, 14b), respectively.

6. Assembly system (12) according to claim 5, **characterized in that** synchronization means (30) are provided by means of which the lifting devices (58) of the first and of the second guide carriage (14a, 14b), when said carriages are interconnected via the connection module (18), can be moved synchronously.

7. Assembly system (12) according to any of claims 1 to 6, **characterized in that** said system comprises a third guide carriage (14c) for holding a third engine component (16c), in particular a fan module of the gas turbine (10), it being possible for the third guide carriage (14c) to be detachably connected to the connection module (18) by corresponding holding means (24).

8. Assembly system (12) according to claim 7, **characterized in that** the third guide carriage (14c) comprises adjustable and/or motor-driven wheels (62) and/or a ring holder (52) for detachably securing an assembly ring (54) of the third engine component (16c) and/or a lifting device (58) for lifting and lowering the third engine component (16c) relative to the third guide carriage (14c) and/or drive means (64) for rotating the third engine component (16c) relative to the third guide carriage (14c) and/or positioning means (32) for setting a spatial orientation of the third engine component (16c) relative to the third guide carriage (14c).

9. Assembly system (12) according to any of claims 1 to 8, **characterized in that** the connection module (18) and at least one of the guide carriages (14a-c), when connected, can be pivoted relative to one another by means of a damping device and/or by means of a hinge device only within a prespecified angular range.

10. Assembly system (12) according to any of claims 1 to 9, **characterized in that** the connection module (18) comprises at least one roller (28) which is in contact with the ground when the connection module (18) is connected to fewer than two of the guide carriages (14a-c), and/or which is not in contact with the ground when the connection module (18) is connected to at least two of the guide carriages (14a-c).

11. Assembly system (12) according to any of claims 1 to 10, **characterized in that** at least one of the guide carriages (14a-c) comprises a drive device for motor-assisted movement, which device can be controlled in an open-loop and/or closed-loop manner.

12. Assembly system (12) according to claim 11, **characterized in that** synchronization means (30) are provided by means of which the drive devices of at least two guide carriages (14a-c) can be controlled such that the guide carriages (14a-c), when said carriages are interconnected via the connection module (18), can be moved synchronously.

13. Method for at least partially assembling a gas turbine (10), comprising the steps of:
- providing a first engine component (16a), in particular a turbine module of the gas turbine (10), a second engine component (16b), in particular a compressor module of the gas turbine (10), and a core module (36) of the gas turbine (10);
- attaching the first engine component (16a) to a first end region of the core module (36); and
- attaching the second engine component (16b) to a second end region of the core module (36);
- the first engine component (16a) being held by means of a first guide carriage (14a) and the second engine component (16b) being held by means of a second guide carriage (14b); and
- the first guide carriage (14a) and the second guide carriage (14b) being detachably coupled to one another via a connection module (18),
**characterized in that**
at least one of the guide carriages (14a-c) comprises an engine mount by means of which the associated engine component (16a-c) is rotatably mounted, outside its center of mass, about three axes (x, y, z), and **in that** at least one of the guide carriages (14b, c) comprises an engine mount by means of which the associated engine component (16b, c) is moved translationally along at least one axis (z).

14. Method according to claim 13, **characterized in that**
- an assembly ring (54) is attached to the first and/or to the second engine component (16a, 16b) and is detachably secured in a ring holder (52) of the first and/or of the second guide carriage (14a, 14b), respectively; and/or
- **in that** at least the first and/or the second engine component (16a, 16b) is lifted and/or lowered relative to the first and/or the second guide carriage (14a, 14b), respectively, by means of a lifting device (58); and/or
- **in that** at least the first and/or the second engine component (14a, 14b) is rotated relative to the first and/or the second guide carriage (14a, 14b), respectively, by drive means (64); and/or
- **in that** a spatial orientation of at least the first and/or the second engine component (16a, 16b) is set relative to the first and/or the second guide carriage (14a, 14b), respectively, by positioning means (32).

15. Method according to either claim 13 or claim 14, **characterized by** the additional steps of:
- uncoupling the second guide carriage (14b) from the connection module (18) after the second engine component (16a) has been attached to the core module (36);
- holding a third engine component (16c), in particular a fan module of the gas turbine (10), by means of a third guide carriage (14c);
- detachably coupling the third guide carriage (14c) to the connection module (18); and
- attaching the third engine component (14c) to the second engine component (16b).

## Revendications

1. Système de montage (12) pour le montage, le démontage et/ou la maintenance d'une turbine à gaz (10), comprenant :
- un premier chariot de guidage (14a) destiné au maintien d'un premier élément constitutif de réacteur (16a), en particulier d'un module de turbine de la turbine à gaz (10) ;
- un deuxième chariot de guidage (14b) destiné maintien d'un deuxième élément constitutif de réacteur (16b), en particulier d'un module de compresseur de la turbine à gaz (10) ; et
- un module de liaison (18) qui peut être relié de manière amovible aux premier et deuxième chariots de guidage (14a, 14b) au moyen d'éléments d'accouplement (24) correspondants,
**caractérisé**
**en ce qu'**au moins l'un des chariots de guidage (14a-c) comprend un logement de réacteur au moyen duquel l'élément constitutif de réacteur (16a-c) associé peut être monté en dehors de son centre de masse de manière à pouvoir tourner autour de trois axes (x, y, z), et **en ce qu'**au moins l'un des chariots de guidage (14b, c) comprend un logement de réacteur au moyen duquel l'élément constitutif de réacteur (16b, c) associé peut être déplacé en translation le long d'au moins un axe (z).

2. Système de montage (12) selon la revendication 1, **caractérisé en ce qu'**il comprend au moins un dispositif de maintien (34) destiné à maintenir de manière amovible au moins un module central (36) de la turbine à gaz (10).

3. Système de montage (12) selon la revendication 2, **caractérisé en ce qu'**au moins un dispositif de maintien (34) est conçu pour lever et abaisser le module central (36) par rapport au dispositif de maintien (34) et/ou comprend des éléments de positionnement (32) permettant de régler une orientation spatiale du module central (36) par rapport au dispositif de maintien (34) et/ou **en ce que** le dispositif de maintien (34) est conçu pour être déplaçable.

4. Système de montage (12) selon la revendication 2 ou 3, **caractérisé en ce que** le module de liaison (18) et le dispositif de maintien (34) peuvent être reliés de manière amovible au moyen d'éléments d'accouplement (24) correspondants.

5. Système de montage (12) selon l'une des revendications 1 à 4, **caractérisé en ce que** le premier chariot de guidage (14a) et/ou le deuxième chariot de guidage (14b) comporte un support d'anneau (52) pour la fixation amovible d'un anneau de montage (54) du premier ou du deuxième élément constitutif de réacteur (16a, 16b) et/ou un dispositif de levage (58) pour le levage et l'abaissement du premier ou du deuxième élément constitutif de réacteur (16a, 16b) par rapport au premier ou au deuxième chariot de guidage (14a, 14b) et/ou des éléments d'entraînement (64) destinés à faire tourner le premier ou le deuxième élément constitutif de réacteur (16a, 16b) par rapport au premier ou au deuxième chariot de guidage (14a, 14b) et/ou des éléments de positionnement (32) permettant de régler une orientation spatiale du premier ou du deuxième élément constitutif de réacteur (16a, 16b) par rapport au premier ou au deuxième chariot de guidage (14a, 14b).

6. Système de montage (12) selon la revendication 5, **caractérisé en ce que** des éléments de synchronisation (30) sont prévus, lesquels éléments de synchronisation permettent de déplacer de manière synchrone les dispositifs de levage (58) des premier et deuxième chariots de guidage (14a, 14b), lorsqu'ils sont reliés au moyen du module de liaison (18).

7. Système d'assemblage (12) selon l'une des revendications 1 à 6, **caractérisé en ce qu'**il comprend un troisième chariot de guidage (14c) destiné au maintien d'un troisième élément constitutif de réacteur (16c), en particulier un module de ventilateur de la turbine à gaz (10), dans lequel le troisième chariot de guidage (14c) peut être relié de manière amovible au module de liaison (18) au moyen d'éléments de maintien (24) correspondants.

8. Système de montage (12) selon la revendication 7, **caractérisé en ce que** le troisième chariot de guidage (14c) comprend des roues (62) réglables et/ou motorisées et/ou un support d'anneau (52) pour la fixation amovible d'un anneau de montage (54) du troisième élément constitutif de réacteur (16c) et/ou un dispositif de levage (58) pour le levage et l'abaissement du troisième élément constitutif de réacteur (16c) par rapport au troisième chariot de guidage (14c) et/ou des éléments d'entraînement (64) destinés à faire tourner ledit troisième élément constitutif de réacteur (16c) par rapport audit troisième chariot de guidage (14c) et/ou des moyens de positionnement (32) permettant de régler une orientation spatiale dudit troisième élément constitutif de réacteur (16c) par rapport au troisième chariot de guidage (14c).

9. Système de montage (12) selon l'une des revendications 1 à 8, **caractérisé en ce que** le module de liaison (18) et au moins l'un des chariots de guidage (14a-c) à l'état relié peuvent être pivotés l'un par rapport à l'autre au moyen d'un dispositif d'amortissement et/ou au moyen d'un dispositif articulé uniquement dans une plage angulaire prédéfinie.

10. Système de montage (12) selon l'une des revendications 1 à 9, **caractérisé en ce que** le module de liaison (18) comprend au moins un rouleau (28) qui est en contact avec la terre lorsque le module de liaison (18) est relié à moins de deux des chariots (14a-c) et/ou qui n'est pas en contact avec la terre lorsque le module de liaison (18) est relié à au moins deux des chariots (14a-c).

11. Système de montage (12) selon l'une des revendications 1 à 10, **caractérisé en ce qu'**au moins l'un des chariots de guidage (14a-c) comprend un dispositif d'entraînement contrôlable et/ou réglable pour un déplacement assisté par moteur.

12. Système de montage (12) selon la revendication 11, **caractérisé en ce que** des éléments de synchronisation (30) sont prévus, lesquels éléments de synchronisation permettent de commander les dispositifs d'entraînement d'au moins deux chariots de guidage (14a-c) de sorte que les chariots de guidage (14a-c), lorsqu'ils sont reliés entre eux par le module de liaison (18), puissent être déplacés de manière synchrone.

13. Procédé de montage au moins partiel d'une turbine à gaz (10) comprenant les étapes suivantes :
- la fourniture d'un premier élément constitutif de réacteur (16a), en particulier d'un module de turbine de la turbine à gaz (10), d'un deuxième élément constitutif de réacteur (16b), en particulier d'un module de compresseur de la turbine à gaz (10), et d'un module central (36) de la turbine à gaz (10) ;
- la fixation du premier élément constitutif de réacteur (16a) à une première zone d'extrémité du module central (36) ; et
- la fixation du deuxième élément constitutif de réacteur (16b) à une deuxième zone d'extrémité du module central (36) ;
dans lequel
- le premier élément constitutif de réacteur (16a) est retenu au moyen d'un premier chariot de guidage (14a) et le deuxième élément constitutif de réacteur (16b) est retenu au moyen d'un deuxième chariot de guidage (14b) ; et
- le premier chariot de guidage (14a) et le deuxième chariot de guidage (14b) sont accouplés de manière amovible au moyen d'un module de liaison (18),
**caractérisé**
**en ce qu'**au moins l'un des chariots de guidage (14a-c) comprend un logement de réacteur au moyen duquel l'élément constitutif de réacteur (16a-c) associé peut être monté en dehors de son centre de masse de manière à pouvoir tourner autour de trois axes (x, y, z), et **en ce qu'**au moins l'un des chariots de guidage (14b, c) comprend un logement de réacteur au moyen duquel l'élément constitutif de réacteur (16b, c) associé est déplacé en translation le long d'au moins un axe (z).

14. Procédé selon la revendication 13, **caractérisé**
- **en ce qu'**un anneau de montage (54) est fixé au premier et/ou au deuxième élément constitutif de réacteur (16a, 16b) et fixé de manière amovible dans un support d'anneau (52) du premier ou du deuxième chariot de guidage (14a, 14b) ; et/ou
- **en ce qu'**au moins le premier et/ou le deuxième élément constitutif de réacteur (16a, 16b) est soulevé et/ou abaissé par rapport au premier et/ou au deuxième chariot de guidage (14a, 14b) au moyen d'un dispositif de levage (58) ; et/ou
- **en ce qu'**au moins le premier ou le deuxième élément constitutif de réacteur (14a, 14b) est mis en rotation par rapport au premier ou au deuxième chariot de guidage (14a, 14b) par des éléments d'entraînement (64) ; et/ou
- **en ce qu'**une orientation spatiale d'au moins le premier ou le deuxième élément constitutif de réacteur (16a, 16b) est réglée par rapport au premier ou au deuxième chariot de guidage (14a, 14b) par des éléments de positionnement (32).

15. Procédé selon la revendication 13 ou 14, **caractérisé par** les étapes supplémentaires :
- de désaccouplement du deuxième chariot de guidage (14b) du module de liaison (18) après la fixation du deuxième élément constitutif de réacteur (16a) au module central (36) ;
- de maintien d'un troisième élément constitutif de réacteur (16c), en particulier d'un module de ventilateur de la turbine à gaz (10), au moyen d'un troisième chariot de guidage (14c) ;
- d'accouplement amovible du troisième chariot (14c) au module de liaison (18) ; et
- de fixation du troisième élément constitutif de réacteur (14c) au deuxième élément constitutif de réacteur (16b).
